# EUROPEAN PATENT APPLICATION

(11) **EP 4 845 064 A1**
(43) Date of publication of application: **25.11.2026**
(21) Application number: 25751575.9
(22) Date of filing: 06.02.2025
(51) Int. Cl.: H04L 1/00

(54) **ENCODING METHOD, DECODING METHOD, AND APPARATUS**

(30) Priority: 08.02.2024 CN 202410177288
(71) Applicant: Huawei Technologies Co., Ltd., Shenzhen, Guangdong 518129 (CN)
(72) Inventor: LI, Hang, Shenzhen, Guangdong 518129 (CN); ZHENG, Chen, Shenzhen, Guangdong 518129 (CN); DONG, Pengpeng, Shenzhen, Guangdong 518129 (CN)
(74) Representative: Pfenning, Meinig & Partner mbB
(86) International application number: PCT/CN2025/075985
(87) International publication number: WO 2025/167976

(57) **Abstract**

This application discloses an encoding method, a decoding method, and an apparatus. The encoding method includes: determining, based on a first MCS, a first SNR, a first modulation order, or a first coding rate, a coding rate of a component code corresponding to at least one stage in multi-stage encoding performed on an information bit; performing the multi-stage encoding on the information bit based on a coding rate of a component code corresponding to each stage in the multi-stage encoding, to obtain an encoded bit; and outputting the encoded bit. Because the first MCS, the first SNR, the first modulation order, or the first coding rate is a parameter related to a channel condition, in this embodiment of this application, the coding rate of each stage in the multi-stage encoding is dynamically set based on the channel condition. This helps reduce decoding complexity of the multi-stage encoding and improve encoding and decoding performance of the multi-stage encoding.

## Description

### CROSS-REFERENCE TO RELATED APPLICATIONS

This application claims priority to Chinese Patent Application No. 202410177288.3, filed with the China National Intellectual Property Administration on February 8, 2024 and entitled "ENCODING METHOD, DECODING METHOD, AND APPARATUS", which is incorporated herein by reference in its entirety.

### TECHNICAL FIELD

This application relates to the field of wireless communication, and in particular, to an encoding method, a decoding method, and an apparatus.

### BACKGROUND

Channel encoding and decoding (encoding and decoding for short, including encoding and decoding) are one of the core technologies in the field of wireless communication. For example, in a 3rd generation (3rd generation, 3G) communication system and a 4th generation (4th generation, 4G) communication system, a 3rd generation partnership project (the 3rd generation partnership project, 3GPP) standard uses a turbo code (turbo code) as an encoding and decoding technology. In a 5th generation (5th generation, 5G) communication system, the 3GPP standard uses a low-density parity-check code (low-density parity-check code, LDPC) and a polar (polar) code as an encoding and decoding technology.

With continuous evolution of communication systems, a 6th generation (6th generation, 6G) communication system or another future communication system poses higher requirements on peak throughput and area efficiency of encoding and decoding, and further requires a decrease in power consumption of a decoder. The LDPC code and polar code in 5G cannot meet these extremely high requirements, and multi-stage encoding may be used as a candidate technology for implementing high-throughput and low-power-consumption encoding and decoding. A main idea of multi-stage encoding is to decompose an encoding process of a long code into encoding processes of a plurality of codes with a short code length during encoding, and to decompose a decoding process of a long code into decoding processes of a plurality of short codes during decoding.

However, current research has not yet involved dividing a code length or a coding rate of each stage in multi-stage encoding, and there is an urgent need for an encoding and decoding scheme.

### SUMMARY

This application provides an encoding method, a decoding method, and an apparatus, to divide a code length or a coding rate of each stage in multi-stage encoding, so as to reduce decoding complexity of the multi-stage encoding and improve encoding and decoding performance of the multi-stage encoding.

According to a first aspect, an encoding method is provided, where the method includes: determining, based on a first MCS, a first SNR, a first modulation order, or a first coding rate, a coding rate of a component code corresponding to at least one stage in multi-stage encoding performed on an information bit, where the first MCS is an MCS used for the information bit, the first SNR is an SNR of a channel used to carry the information bit, the first modulation order is a modulation order used for the information bit, and the first coding rate is a coding rate used for the information bit; performing the multi-stage encoding on the information bit based on a coding rate of a component code corresponding to each stage in the multi-stage encoding, to obtain an encoded bit; and outputting the encoded bit.

In this embodiment of this application, the information bit is determined based on the first MCS, the first SNR, the first modulation order, or the first coding rate used for the information bit, to determine the coding rate of the component code corresponding to the at least one stage in the multi-stage encoding. Because the first MCS, the first SNR, the first modulation order, or the first coding rate is a parameter related to a channel condition, in this embodiment of this application, the coding rate of each stage in the multi-stage encoding is dynamically set based on the channel condition, and decoding complexity of the multi-stage encoding can be reduced and encoding and decoding performance of the multi-stage encoding can be improved.

In a possible design, the determining, based on the first MCS, the first SNR, the first modulation order, or the first coding rate, the coding rate of the component code corresponding to the at least one stage in the multi-stage encoding includes: determining, based on the first MCS, the first SNR, the first modulation order, or the first coding rate, a coding rate of a component code corresponding to a first stage in the multi-stage encoding, where the first stage is an initial encoding stage in the multi-stage encoding.

During decoding of the multi-stage encoding, the component code in the first stage is first decoded, and then a component code in another stage is decoded. If the component code in the first stage is correctly decoded, the component code in the another stage does not need to be decoded. Therefore, based on this design manner, division of the coding rate of the component code in the first stage is preferentially considered, so that decoding performance of the component code in the first stage can be fully utilized, unnecessary decoding overheads can be reduced, and an effect of improving decoding performance and reducing decoding complexity can be achieved.

In a possible design, the determining, based on the first MCS, the first SNR, the first modulation order, or the first coding rate, the coding rate of the component code corresponding to the first stage in the multi-stage encoding may include: determining, based on a correspondence between an MCS and the coding rate of the component code corresponding to the first stage, the coding rate that is of the component code corresponding to the first stage and that corresponds to the first MCS; or determining, based on a correspondence between an SNR and the coding rate of the component code corresponding to the first stage, the coding rate that is of the component code corresponding to the first stage and that corresponds to the first SNR; or determining, based on a correspondence between a modulation order and the coding rate of the component code corresponding to the first stage, the coding rate that is of the component code corresponding to the first stage and that corresponds to the first modulation order; or determining, based on a correspondence between a coding rate and the coding rate of the component code corresponding to the first stage, the coding rate that is of the component code corresponding to the first stage and that corresponds to the first coding rate.

In this way, the coding rate of the component code corresponding to the first stage may be determined based on the correspondence, so that an encoding speed is improved.

In a possible design, the coding rate of the component code corresponding to the first stage may be positively correlated with the MCS, the SNR, the modulation order, or the coding rate. In this way, when the channel condition is good, the coding rate of the component code corresponding to the first stage can be increased, or when the channel condition is poor, the coding rate of the component code corresponding to the first stage can be reduced. This reduces complexity of decoding in the first stage while ensuring decoding performance of the component code in the first stage.

The following uses an example in which the multi-stage encoding is two-stage encoding (the two-stage encoding includes the first stage and a second stage).

In a possible design, the determining, based on the first MCS, the first SNR, the first modulation order, or the first coding rate, the coding rate of the component code corresponding to the at least one stage in the multi-stage encoding further includes: determining, based on the first MCS, the first SNR, the first modulation order, or the first coding rate, a coding rate of a component code corresponding to the second stage.

In this design manner, both the coding rate of the component code corresponding to the first stage and the coding rate of the component code corresponding to the second stage are determined based on the first MCS, the first SNR, the first modulation order, or the first coding rate, so that an overall coding rate of the multi-stage encoding can be stable and a system requirement can be met.

In a possible design, the determining, based on the first MCS, the first SNR, the first modulation order, or the first coding rate, the coding rate of the component code corresponding to the second stage in the two-stage encoding may include: determining, based on a correspondence between the MCS and the coding rate of the component code corresponding to the second stage, the coding rate that is of the component code corresponding to the second stage and that corresponds to the first MCS; or determining, based on a correspondence between the SNR and the coding rate of the component code corresponding to the second stage, the coding rate that is of the component code corresponding to the second stage and that corresponds to the first SNR; or determining, based on a correspondence between the modulation order and the coding rate of the component code corresponding to the second stage, the coding rate that is of the component code corresponding to the second stage and that corresponds to the first modulation order; or determining, based on a correspondence between the coding rate and the coding rate of the component code corresponding to the second stage, the coding rate that is of the component code corresponding to the second stage and that corresponds to the first coding rate.

In this way, the coding rate of the component code corresponding to the second stage may be determined based on the correspondence, so that an encoding speed is improved.

In a possible design, the coding rate of the component code corresponding to the second stage is negatively correlated with the MCS, the SNR, the modulation order, or the coding rate.

In this way, the coding rate of the component code corresponding to the first stage and the coding rate of the component code corresponding to the second stage are respectively positively correlated and negatively correlated with the MCS, the SNR, the modulation order, or the coding rate, so that an overall coding rate of the multi-stage encoding can be stable and a system requirement can be met.

In a possible design, the method further includes: determining, based on the coding rate of the component code corresponding to the first stage and a total coding rate of the two-stage encoding, a coding rate of a component code corresponding to the second stage.

In this way, it can be ensured that the coding rate of the component code corresponding to the first stage and the coding rate of the component code corresponding to the second stage can match a requirement of the total coding rate of the two-stage encoding.

In a possible design, the performing the multi-stage encoding on the information bit based on the coding rate of the component code corresponding to each stage in the multi-stage encoding includes: performing the multi-stage encoding on the information bit based on the coding rate, a quantity of bits before encoding, and a quantity of bits after encoding that are of the component code corresponding to each stage in the multi-stage encoding.

In this way, reliability of the encoding scheme can be improved.

In a possible design, the method further includes: determining, based on the coding rate and the quantity of bits before encoding that are of the component code corresponding to each stage in the multi-stage encoding, the quantity of bits after encoding of the component code corresponding to each stage.

In this design manner, when the coding rate and the quantity of bits before encoding (that is, a code length before encoding) that are of the component code corresponding to each stage in the multi-stage encoding are determined, division of a code length after encoding (that is, the quantity of bits after encoding) of the component code corresponding to each stage is implemented, so that decoding complexity of the multi-stage encoding can be reduced and encoding and decoding performance of the multi-stage encoding can be improved.

In a possible design, the method further includes: determining, based on a total quantity of bits before encoding of the multi-stage encoding and a first ratio coefficient, the quantity of bits before encoding of the component code corresponding to each stage in the multi-stage encoding, where the first ratio coefficient is a ratio of a quantity of bits before encoding of the component code corresponding to the first stage in the multi-stage encoding to the total quantity of bits before encoding.

In a possible design, the method further includes: determining, based on a correspondence between the MCS and a ratio coefficient, the first ratio coefficient corresponding to the first MCS; or determining, based on a correspondence between the SNR and a ratio coefficient, the first ratio coefficient corresponding to the first SNR; or determining, based on a correspondence between the modulation order and a ratio coefficient, the first ratio coefficient corresponding to the first modulation order; or determining, based on a correspondence between the coding rate and a ratio coefficient, the first ratio coefficient corresponding to the first coding rate.

In a possible design, the ratio coefficient is positively correlated with the MCS, the SNR, the modulation order, or the coding rate.

In this way, when the channel condition is good, the quantity of bits before encoding corresponding to the component code in the first stage may be increased, or when the channel condition is poor, the quantity of bits before encoding corresponding to the component code in the first stage may be reduced.

In a possible design, the method further includes: determining, based on the coding rate and the quantity of bits after encoding that are of the component code corresponding to each stage in the multi-stage encoding, the quantity of bits before encoding of the component code corresponding to each stage.

In this design manner, when the coding rate and a code length after encoding (that is, the quantity of bits after encoding) that are of the component code corresponding to each stage in the multi-stage encoding are determined, division of the quantity of bits before encoding (that is, a code length before encoding) of the component code corresponding to each stage is implemented, so that decoding complexity of the multi-stage encoding can be reduced and encoding and decoding performance of the multi-stage encoding can be improved.

In a possible design, the method further includes: determining, based on a total quantity of bits after encoding of the multi-stage encoding and a second ratio coefficient, the quantity of bits after encoding of the component code corresponding to each stage in the multi-stage encoding, where the second ratio coefficient is a ratio of a quantity of bits after encoding of the component code corresponding to the first stage in the multi-stage encoding to the total quantity of bits after encoding.

In a possible design, the method further includes: determining, based on a correspondence between the MCS and a ratio coefficient, the second ratio coefficient corresponding to the first MCS; or determining, based on a correspondence between the SNR and a ratio coefficient, the second ratio coefficient corresponding to the first SNR; or determining, based on a correspondence between the modulation order and a ratio coefficient, the second ratio coefficient corresponding to the first modulation order; or determining, based on a correspondence between the coding rate and a ratio coefficient, the second ratio coefficient corresponding to the first coding rate.

In a possible design, the ratio coefficient is positively correlated with the MCS, the SNR, the modulation order, or the coding rate.

In this way, when the channel condition is good, the quantity of bits after encoding corresponding to the component code in the first stage may be increased, or when the channel condition is poor, the quantity of bits after encoding corresponding to the component code in the first stage may be reduced.

In a possible design, the method further includes: performing rate matching on the component code corresponding to the first stage in the multi-stage encoding based on a first target code length; and performing rate matching on the component code corresponding to the second stage in the multi-stage encoding based on a second target code length.

In this design manner, rate matching is performed in a stage-by-stage manner, so that flexibility of rate matching can be improved, and puncturing or repetition in a rate matching process can be distributed to each stage in the multi-stage encoding, thereby improving encoding and decoding performance of the multi-stage encoding.

In a possible design, the performing the multi-stage encoding on the information bit based on the coding rate of the component code corresponding to each stage in the multi-stage encoding includes: if a quantity of bits of the information bit is not capable of being exactly divided by the total quantity of bits before encoding of the multi-stage encoding, performing at least one of repetition and zero padding on the information bit, to enable a quantity of bits of the processed information bit to be capable of being exactly divided by the total quantity of bits before encoding of the multi-stage encoding; and performing the multi-stage encoding on the processed information bit based on the coding rate of the component code corresponding to each stage in the multi-stage encoding.

In this way, the processed information bit can be applicable to the multi-stage encoding, thereby improving applicability of the multi-stage encoding.

In a possible design, the multi-stage encoding is a product code or a concatenated code. Certainly, this is merely an example, and is not limited thereto in practice.

According to a second aspect, an encoding method is provided. The method includes: determining, based on a coding rate and a quantity of bits before encoding that are of a component code corresponding to each stage in multi-stage encoding performed on information bit, a quantity of bits after encoding of the component code corresponding to each stage, or determining, based on a coding rate and a quantity of bits after encoding that are of a component code corresponding to each stage in multi-stage encoding performed on information bit, a quantity of bits before encoding of the component code corresponding to each stage; performing the multi-stage encoding on the information bit based on the coding rate, the quantity of bits before encoding, and the quantity of bits after encoding that are of the component code corresponding to each stage in the multi-stage encoding, to obtain an encoded bit; and outputting the encoded bit.

In this embodiment of this application, when the coding rate of the component code corresponding to each stage in the multi-stage encoding is determined, a code length of each stage in the multi-stage encoding may be divided by adjusting a quantity of bits before encoding or a quantity of bits after encoding of the component code corresponding to each stage in multi-stage encoding, so that decoding complexity of the multi-stage encoding can be reduced and encoding and decoding performance of the multi-stage encoding can be improved.

In a possible design, determining, based on a total quantity of bits before encoding of the multi-stage encoding and a first ratio coefficient, the quantity of bits before encoding of the component code corresponding to each stage in the multi-stage encoding, where the first ratio coefficient is a ratio of a quantity of bits before encoding of the component code corresponding to the first stage in the multi-stage encoding to the total quantity of bits before encoding.

In a possible design, determining, based on a correspondence between an MCS and a ratio coefficient, the first ratio coefficient corresponding to the first MCS; or determining, based on a correspondence between an SNR and a ratio coefficient, the first ratio coefficient corresponding to the first SNR; or determining, based on a correspondence between a modulation order and a ratio coefficient, the first ratio coefficient corresponding to the first modulation order; or determining, based on a correspondence between a coding rate and a ratio coefficient, the first ratio coefficient corresponding to the first coding rate.

In a possible design, the ratio coefficient is positively correlated with the MCS, the SNR, the modulation order, or the coding rate.

In this way, when the channel condition is good, the quantity of bits before encoding corresponding to the component code in the first stage may be increased, or when the channel condition is poor, the quantity of bits before encoding corresponding to the component code in the first stage may be reduced.

In a possible design, determining, based on a total quantity of bits after encoding of the multi-stage encoding and a second ratio coefficient, the quantity of bits after encoding of the component code corresponding to each stage in the multi-stage encoding, where the second ratio coefficient is a ratio of a quantity of bits after encoding of the component code corresponding to the first stage in the multi-stage encoding to the total quantity of bits after encoding.

In a possible design, the method further includes: determining, based on a correspondence between an MCS and a ratio coefficient, the second ratio coefficient corresponding to the first MCS; or determining, based on a correspondence between an SNR and a ratio coefficient, the second ratio coefficient corresponding to the first SNR; or determining, based on a correspondence between a modulation order and a ratio coefficient, the second ratio coefficient corresponding to the first modulation order; or determining, based on a correspondence between a coding rate and a ratio coefficient, the second ratio coefficient corresponding to the first coding rate.

In a possible design, the ratio coefficient is positively correlated with the MCS, the SNR, the modulation order, or the coding rate.

In this way, when the channel condition is good, the quantity of bits after encoding corresponding to the component code in the second stage may be increased, or when the channel condition is poor, the quantity of bits after encoding corresponding to the component code in the first stage may be reduced.

According to a third aspect, a decoding method is provided. The method includes: obtaining an encoded bit, where the encoded bit is the encoded bit according to any one of the first aspect or the possible designs of the first aspect, or the second aspect or the possible designs of the second aspect; performing multi-stage decoding on the encoded bit, to obtain an information bit; and outputting the information bit.

According to a fourth aspect, a decoding method is provided. The method includes: obtaining an encoded bit; determining, based on a first MCS, a first SNR, a first modulation order, or a first coding rate, a coding rate of a component code corresponding to at least one stage in multi-stage decoding performed on the encoded bit, where the first MCS is an MCS used for the encoded bit and the information bit, the first SNR is an SNR of a channel used to carry the encoded bit, the first modulation order is a modulation order used for the encoded bit, and the first coding rate is a coding rate used for the encoded bit; and performing the multi-stage encoding on the encoded bit based on a coding rate of a component code corresponding to each stage in the multi-stage encoding, to obtain an information bit.

According to a fifth aspect, a communication apparatus is provided. The apparatus includes a module, unit, or technical means configured to perform the method according to any one of the first aspect or the possible designs of the first aspect.

For example, the apparatus may include:
a processing module, configured to: determine, based on a first MCS, a first SNR, a first modulation order, or a first coding rate, a coding rate of a component code corresponding to at least one stage in multi-stage encoding performed on an information bit, where the first MCS is an MCS used for the information bit, the first SNR is an SNR of a channel used to carry the information bit, the first modulation order is a modulation order used for the information bit, and the first coding rate is a coding rate used for the information bit; and perform the multi-stage encoding on the information bit based on a coding rate of a component code corresponding to each stage in the multi-stage encoding, to obtain an encoded bit; and
an input/output module, configured to output the encoded bit.

According to a sixth aspect, a communication apparatus is provided. The apparatus includes a module, unit, or technical means configured to perform the method according to any one of the second aspect or the possible designs of the second aspect.

For example, the apparatus may include:
a processing module, configured to: determine, based on a coding rate and a quantity of bits before encoding that are of a component code corresponding to each stage in multi-stage encoding performed on information bit, a quantity of bits after encoding of the component code corresponding to each stage, or determining, based on a coding rate and a quantity of bits after encoding that are of a component code corresponding to each stage in multi-stage encoding performed on information bit, a quantity of bits before encoding of the component code corresponding to each stage; and perform the multi-stage encoding on the information bit based on the coding rate, the quantity of bits before encoding, and the quantity of bits after encoding that are of the component code corresponding to each stage in the multi-stage encoding, to obtain an encoded bit; and
an input/output module, configured to output the encoded bit.

According to a seventh aspect, a communication apparatus is provided. The apparatus includes a module, unit, or technical means configured to perform the method according to any one of the third aspect or the possible designs of the third aspect.

For example, the apparatus may include:
an input/output module, configured to obtain an encoded bit, where the encoded bit is the encoded bit according to any one of the first aspect or the possible designs of the first aspect, or the second aspect or the possible designs of the second aspect; and
a processing module, configured to perform multi-stage decoding on the encoded bit, to obtain an information bit.

According to an eighth aspect, a communication apparatus is provided. The apparatus includes a module, unit, or technical means configured to perform the method according to any one of the fourth aspect or the possible designs of the fourth aspect.

For example, the apparatus may include:
an input/output module, configured to obtain an encoded bit; and
a processing module, configured to: determine, based on a first MCS, a first SNR, a first modulation order, or a first coding rate, a coding rate of a component code corresponding to at least one stage in multi-stage decoding performed on the encoded bit, where the first MCS is an MCS used for the encoded bit and the information bit, the first SNR is an SNR of a channel used to carry the encoded bit, the first modulation order is a modulation order used for the encoded bit, and the first coding rate is a coding rate used for the encoded bit; and perform the multi-stage encoding on the encoded bit based on a coding rate of a component code corresponding to each stage in the multi-stage encoding, to obtain an information bit.

According to a ninth aspect, a communication apparatus is provided, including a processor and a memory. The processor is coupled to the memory, the memory is configured to store computer-executable instructions, and the processor is configured to execute the computer-executable instructions stored in the memory, so that the communication apparatus is enabled to perform the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to a tenth aspect, a chip is provided, including a logic circuit and an input/output interface. The input/output interface is configured to: receive a signal from another apparatus other than the chip, and transmit the signal to the logic circuit, or send a signal from the logic circuit to the another apparatus other than the chip. The logic circuit is configured to implement the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to an eleventh aspect, a computer-readable storage medium is provided. The storage medium stores a computer program or instructions. When the computer program or the instructions are executed by a communication apparatus, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is implemented.

According to a twelfth aspect, a computer program product is provided. When the computer program product runs on a computer, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is performed.

According to a thirteenth aspect, a communication system is provided, including a first communication apparatus and a second communication apparatus, where the first communication apparatus is configured to perform the method according to any one of the first aspect or the possible designs of the first aspect, or any one of the second aspect or the possible designs of the second aspect, and the second communication apparatus is configured to perform the method according to any one of the third aspect or the possible designs of the third aspect, or any one of the fourth aspect or the possible designs of the fourth aspect.

For beneficial effects of the third aspect to the thirteenth aspect, refer to beneficial effects of corresponding designs in the first aspect and the second aspect.

### BRIEF DESCRIPTION OF DRAWINGS

FIG. 1 is a diagram of a product code;
FIG. 2 is a diagram of a concatenated code;
FIG. 3 is a diagram of a network architecture of a communication system to which an embodiment of this application is applicable;
FIG. 4 is a flowchart of an encoding method according to an embodiment of this application;
FIG. 5 is an example diagram of an encoding procedure according to an embodiment of this application;
FIG. 6 is a flowchart of a decoding method according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip according to an embodiment of this application.

### DESCRIPTION OF EMBODIMENTS

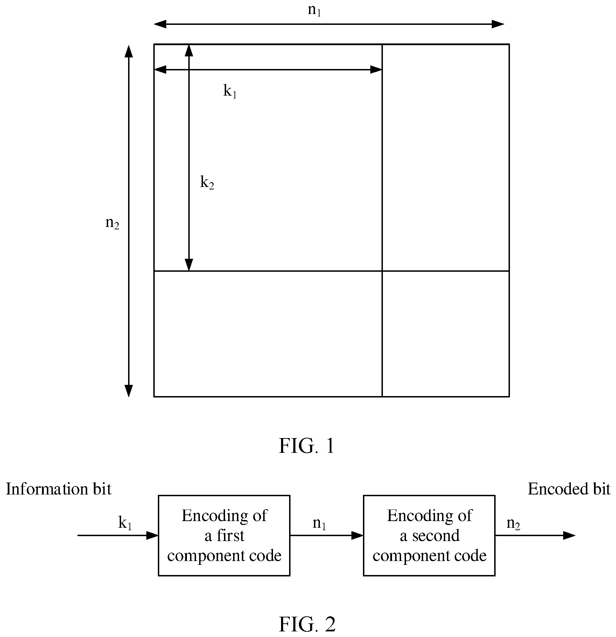

For ease of understanding of the technical solutions provided in embodiments of this application, the following explains and describes technical terms used in embodiments of this application.
(1) Product code: The product code is a type of multi-stage encoding technology. A two-dimensional product code includes two types of component codes: 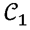 and 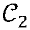 , and two-step encoding is completed through row component encoding and column component encoding. For example, FIG. 1 is a diagram of an encoding scheme of a product code. Based on a binary linear code 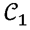 with a code length (a length of a bit after encoding), a length of an information bit, and a shortest distance of (*n*₁, *k*₁, *d*₁), and a binary linear code 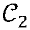 with a code length (a length of a bit after encoding), a length of an information bit, and a shortest distance of (*n*₂, *k*₂, *d*₂), a two-dimensional product code may be constructed by using the following method: arranging an information bit with a length of *k*₁*k*₂ into a *k*₂ × *k*₁ matrix ***C*₁**; encoding each row of ***C*₁** based on 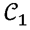 , to obtain a *k*₂ × *n*₁ matrix ***C*₂**; and encoding each column of ***C*₂** based on 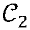 , to obtain a *n*₂ × *n*₁ matrix ***C***, that is, a two-dimensional product code word with a length of *n*₁*n*₂ determined by 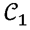 and 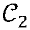 . A coding rate of the product code is *k*₁*k*₂/*n*₁*n*₂. This specification mainly uses a two-dimensional product code as an example, and is not limited to the two-dimensional product code in practice.
(2) Serial concatenated code (concatenated code for short): The concatenated code is a type of multi-stage encoding technology. For example, FIG. 2 is a diagram of an encoding scheme of a concatenated code. Based on a binary linear code 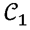 with a code length (a length of a bit after encoding) and a length of an information bit of (n₁, k₁) and a binary linear code 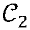 with a code length (a length of a bit after encoding) and a length of an information bit of (n₂, n₁), a concatenated code formed by two component codes is constructed in the following manner: encoding, through 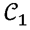 , an information bit with a length of k₁, to obtain a sequence with a length of n₁, and using the sequence with a length of *n*₁ as an input of a second component code 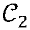 , that is, using a sequence with a length of *k*₂ = n₁ as an information bit and encoding the sequence through 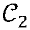 , to obtain a sequence with a length of n₂. A coding rate of the concatenated code is k₁/n₂.
(3) A component code (for example, English: component code) is a codeword obtained through encoding at each stage in multi-stage encoding. One or more component codes may be obtained in each stage of multi-stage encoding. For example, in the product code shown in FIG. 1, there are a total of k₂ component codes with a length of n₁ in a first stage, and there are a total of n₁ component codes with a length of n₂ in a second stage. For example, in the concatenated code shown in FIG. 2, there is only one component code with a length of n₁ in a first stage, and there is only one component code with a length of n₂ in a second stage.
(4) A modulation and coding scheme (modulation and coding scheme, MCS) may alternatively be referred to as a modulation and coding solution, a modulation and coding strategy, or the like.

In a communication system, when a transmitting communication device and a receiving communication device perform data transmission, the transmitting communication device may encode and modulate a to-be-sent information bit based on the MCS to obtain a modulation symbol, and send the modulation symbol to the receiving device. After receiving the modulation symbol, the receiving device may demodulate and decode the modulation symbol based on the MCS, to restore the original information bit.

In specific implementation, the MCS used by the communication device (the transmitting communication device and/or the receiving communication device) may be configured through an MCS table. The MCS table is a table including MCSs. One MCS table may include at least one MCS, each MCS has a corresponding index (index) (that is, an MCS index), and each MCS further corresponds to at least one of the following content: a modulation order (modulation order), a coding rate (coding rate), and spectral efficiency (spectral efficiency). The coding rate may also be referred to as a coding rate for short.

For example, Table 1 is an example of a possible MCS table. One row in the table corresponds to one MCS, and each MCS may be identified through an MCS index of the MCS.

**Table 1**

| MCS index (*I_{MCS}*) | Modulation order *Qₘ* | Coding rate *R*×1024 | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 499 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| ... | ... | ... | ... |

It may be understood that Table 1 is merely an example, and a form of an actual MCS table is not limited thereto.

(5) A plurality of involved in embodiments of this application refers to two or more. The term "and/or" describes an association relationship for associated objects and represents that three relationships may exist. For example, A and/or B may represent the following three cases: Only A exists, both A and B exist, and only B exists. The character "/" usually indicates an "or" relationship between the associated objects. In addition, it should be understood that although the terms such as first and second may be used in embodiments of the present invention to describe objects, these objects are not limited by these terms. These terms are merely used to distinguish the objects from each other.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The technical solutions in embodiments of this application may be applied to various communication systems, for example, a 5th generation (5th generation, 5G) mobile communication system, such as a new radio (new radio, NR) system, a 6th generation (6th generation, 6G) mobile communication system, a universal mobile communications system (universal mobile telecommunications system, UMTS), a wireless local area network (wireless local area network, WLAN), a wireless fidelity (wireless fidelity, Wi-Fi) system, and another future evolved communication system.

Embodiments of this application may be applied to the following scenarios: enhanced mobile broadband (enhanced mobile broadband, eMBB), multi-station transmission (a same terminal device transmits a signal to a plurality of stations), a backhaul scenario, wireless to the x (wireless to the x, WTTx), device-to-device (device-to-device, D2D), or another scenario that has a high requirement on timing or a high requirement on a transmission rate.

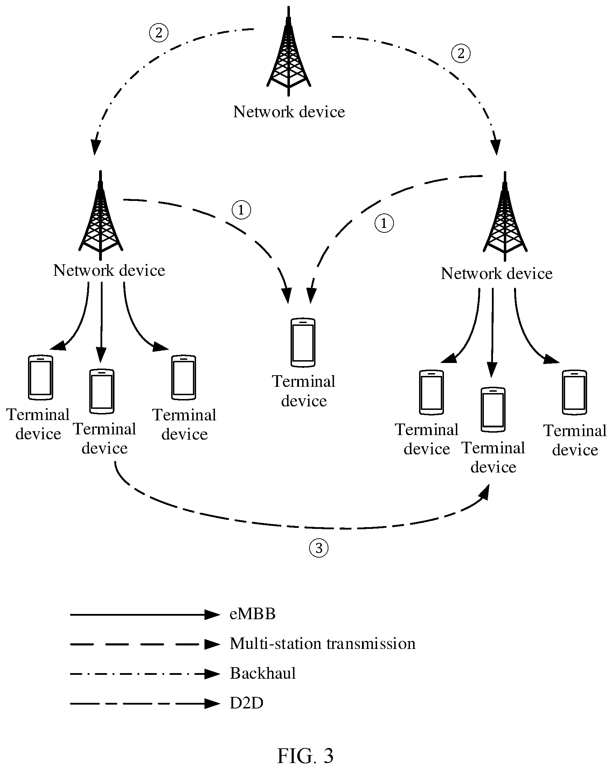

For example, FIG. 3 is a diagram of a communication system to which an embodiment of this application is applicable. As shown in FIG. 3, the communication system may include one or more network devices and one or more terminal devices. An interface between the network device and the terminal device may be a Uu interface (also referred to as an air interface), and data transmission may be performed between the network device and the terminal device through an air interface resource.

FIG. 3 shows an example of a scenario to which an embodiment of this application is applicable, that is, eMBB (shown by a solid line in FIG. 3), multi-station transmission (shown by a dashed line ① in FIG. 3), a backhaul scenario (shown by a dashed line ② in FIG. 3), and D2D (shown by a dashed line ③ in FIG. 3). It should be understood that the four scenarios shown in FIG. 3 are merely examples. This is not limited in this embodiment of this application.

The network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of the base station, for example, may be a central unit (central unit, CU), or may be a distributed unit (distributed unit, DU). The access network device may be a macro base station (like 110a in FIG. 3), or may be a micro base station or an indoor base station (like 110b in FIG. 3), or may be a relay node or a donor node. A specific technology and a specific device form that are used by the access network device are not limited in embodiments of this application. In embodiments of this application, an example in which the base station is used as the access network device is used for description.

In a possible scenario, a plurality of RAN nodes cooperatively assist a terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN or open RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal device may be widely used in various scenarios, for example, device-to-device (device-to-device, D2D) communication, vehicle-to-everything (vehicle to everything, V2X) communication, machine-type communication (machine-type communication, MTC), internet of things (internet of things, IoT), virtual reality, augmented reality, industrial control, autonomous driving, telemedicine, smart grid, smart home, smart office, smart wearable, smart transportation, and smart city. The terminal device may be a mobile phone, a tablet computer, a computer, a wearable device, a vehicle, an uncrewed aerial vehicle, a helicopter, an airplane, a ship, a robot, a mechanical arm, a smart home device, or the like that has a wireless transceiver function. A specific technology and a specific device form that are used by the terminal device are not limited in embodiments of this application.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, and an artificial satellite in the air. Application scenarios of the base station and the UE are not limited in embodiments of this application.

Communication between a base station and a UE, between base stations, and between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in embodiments of this application.

The communication system and the service scenario described in embodiments of this application are intended to describe the technical solutions in embodiments of this application more clearly, and do not constitute a limitation on the technical solutions provided in embodiments of this application. A person of ordinary skill in the art may learn that, with evolution of a network architecture and emergence of a new scenario, the technical solutions provided in embodiments of this application are also applicable to similar technical problems.

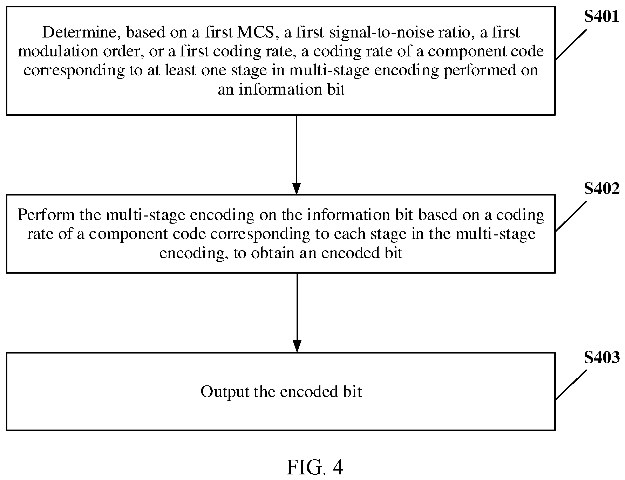

FIG. 4 is a flowchart of an encoding method according to an embodiment of this application. The method may be applied to the communication system shown in FIG. 3. The method may be performed by a first communication device. Unless otherwise specified, the "first communication device" in this application may be the first communication device (for example, the network device or the terminal device shown in FIG. 3), may be a component (for example, a processor, a chip, or a chip system) in the first communication device, or may be a logic module or software that can implement all or some functions of the first communication device. The method includes steps S401 to S403.

S401: Determine, based on a first MCS, a first signal-to-noise ratio (signal to interference plus noise ratio, SNR), a first modulation order, or a first coding rate, a coding rate of a component code corresponding to at least one stage in multi-stage encoding performed on an information bit.

In this embodiment of this application, the coding rate of the component code corresponding to the at least one stage in the multi-stage encoding performed on the information bit is related to at least one of the following: the first MCS, the first SNR, the first modulation order, and the first coding rate. The first MCS is an MCS used for the information bit, the first SNR is an SNR of a channel used to carry the information bit, the first modulation order is a modulation order used for the information bit, and the first coding rate is a coding rate used for the information bit, that is, an overall coding rate of the multi-stage encoding.

It may be understood that the MCS herein may refer to a row in an MCS table. In some embodiments, each MCS (for example, the first MCS) may be uniquely identified by an MCS index of the MCS. Therefore, the MCS may also be referred to as an MCS index. The coding rate of the component code refers to a coding rate of the component code, and is equal to a ratio of a quantity of information bits of the component code to a total quantity of bits of the component code.

The multi-stage encoding includes at least two stages. A specific encoding technology of the multi-stage encoding includes but is not limited to a product code or a concatenated code. For ease of description, in the following, a product code of two-stage encoding is mainly used as an example. In the multi-stage encoding, an initial encoding stage is described as a "first stage", and the other stage is described as a "second stage".

In a possible design manner, the coding rate of the component code corresponding to the first stage in the multi-stage encoding is related to the first MCS, the first SNR, the first modulation order, or the first coding rate. Correspondingly, the determining, based on the first MCS, the first SNR, the first modulation order, or the first coding rate, the coding rate of the component code corresponding to the at least one stage in the multi-stage encoding includes: determining, based on the first MCS, the first SNR, the first modulation order, or the first coding rate, a coding rate of a component code corresponding to a first stage in the multi-stage encoding. During decoding (or referred to as "decoding") of the multi-stage encoding, the component code in the first stage is first decoded, and then a component code in another stage is decoded. If the component code in the first stage is correctly decoded, the component code in the another stage does not need to be decoded. Therefore, based on this design manner, division of the coding rate of the component code in the first stage is preferentially considered, so that decoding performance of the component code in the first stage can be fully utilized, unnecessary decoding overheads can be reduced, and an effect of improving decoding performance and reducing decoding complexity can be achieved.

For ease of description, the following uses "r₁" to represent the coding rate of the component code corresponding to the first stage.

The following describes in detail a specific implementation of determining the coding rate of the component code corresponding to the first stage in the multi-stage encoding.

In a possible implementation, the coding rate that is of the component code corresponding to the first stage and that corresponds to the first MCS may be determined based on a correspondence between an MCS and the coding rate of the component code corresponding to the first stage.

Optionally, the coding rate of the component code corresponding to the first stage is positively correlated with the MCS. Specifically, when the MCS increases, the coding rate of the component code corresponding to the first stage also increases; or when the MCS decreases, the coding rate of the component code corresponding to the first stage also decreases.

In specific implementation, the correspondence between the MCS and the coding rate of the component code corresponding to the first stage may be represented in a plurality of manners. In a possible example, the correspondence between the MCS and the coding rate of the component code corresponding to the first stage is in a form of a table. For example, Table 1A is an example of the correspondence between the MCS and the coding rate of the component code corresponding to the first stage.

**Table 1A**

| MCS | r₁ |
|---|---|
| 27 | 0.93 |
| 26 | 0.91 |
| 25 | 0.87 |
| ··· | ··· |
| 0 | 0.71 |

It may be understood that the coding rate that is of the component code corresponding to the first stage and that corresponds to the MCS in each row in Table 1A is r₁ in the row.

It should be noted that Table 1A is merely an example of the correspondence between the MCS and the coding rate of the component code corresponding to the first stage. In actual application, the MCS in the correspondence between the MCS and the coding rate of the component code corresponding to the first stage is not limited to the MCS provided in Table 1A, and r₁ corresponding to each MCS is not limited to r₁ provided in the table. In addition to being represented in a row manner in the table, the correspondence may alternatively be represented in a column manner. This is not limited in this embodiment of this application.

In a possible implementation, the coding rate that is of the component code corresponding to the first stage and that corresponds to the first SNR may be determined based on a correspondence between an SNR and the coding rate of the component code corresponding to the first stage.

Optionally, the coding rate of the component code corresponding to the first stage is positively correlated with the SNR. Specifically, when the SNR increases, the coding rate of the component code corresponding to the first stage also increases; or when the SNR decreases, the coding rate of the component code corresponding to the first stage also decreases.

In specific implementation, the correspondence between the SNR and the coding rate of the component code corresponding to the first stage may be represented in a plurality of manners. In a possible example, the correspondence between the SNR and the coding rate of the component code corresponding to the first stage is in a form of a table. For example, Table 2A is an example of the correspondence between the SNR and the coding rate of the component code corresponding to the first stage.

**Table 2A**

| SNR | r₁ |
|---|---|
| [T₂₇, +∞) | 0.93 |
| [T₂₆, T₂₇) | 0.91 |
| [T₂₅, T₂₆) | 0.87 |
| ... | ... |
| (-∞, T₀) | 0.71 |

It may be understood that the coding rate that is of the component code corresponding to the first stage and that corresponds to the SNR in each row in Table 2A is r₁ in the row.

It should be noted that Table 2A is merely an example of the correspondence between the SNR and the coding rate of the component code corresponding to the first stage. In actual application, a value interval division manner of the SNR in the correspondence between the SNR and the coding rate of the component code corresponding to the first stage is not limited to the division manner provided in Table 2A, and r₁ corresponding to each SNR interval is not limited to r₁ provided in the table. In addition to being represented in a row manner in the table, the correspondence may alternatively be represented in a column manner. This is not limited in this embodiment of this application.

In a possible implementation, the coding rate that is of the component code corresponding to the first stage and that corresponds to the first modulation order may be determined based on a correspondence between a modulation order and the coding rate of the component code corresponding to the first stage.

Optionally, the coding rate of the component code corresponding to the first stage is positively correlated with the modulation order. Specifically, when the modulation order increases, the coding rate of the component code corresponding to the first stage also increases; or when the modulation order decreases, the coding rate of the component code corresponding to the first stage also decreases.

In specific implementation, the correspondence between the modulation order and the coding rate of the component code corresponding to the first stage may be represented in a plurality of manners. In a possible example, the correspondence between the modulation order and the coding rate of the component code corresponding to the first stage is in a form of a table. For example, Table 3A is an example of the correspondence between the modulation order and the coding rate of the component code corresponding to the first stage.

**Table 3A**

| Modulation order | r₁ |
|---|---|
| (1024, +∞) | 0.93 |
| (256, 1024] | 0.91 |
| (64, 256] | 0.87 |
| ... | ... |
| [2, 4] | 0.72 |

It may be understood that the coding rate that is of the component code corresponding to the first stage and that corresponds to the modulation order in each row in Table 3A is r₁ in the row.

A modulation scheme corresponding to 1024 is 1024-QAM, a modulation scheme corresponding to 256 is 256-QAM, a modulation scheme corresponding to 64 is 64-QAM, and a modulation scheme corresponding to 2 is BPSK.

It should be noted that Table 3A is merely an example of the correspondence between the modulation order and the coding rate of the component code corresponding to the first stage. In actual application, the modulation order in the correspondence between the modulation order and the coding rate of the component code corresponding to the first stage is not limited to the modulation order provided in Table 3A, and r₁ corresponding to each modulation order is not limited to r₁ provided in the table. In addition to being represented in a row manner in the table, the correspondence may alternatively be represented in a column manner. This is not limited in this embodiment of this application.

In a possible implementation, the coding rate that is of the component code corresponding to the first stage and that corresponds to the first coding rate may be determined based on a correspondence between a coding rate and the coding rate of the component code corresponding to the first stage.

It may be understood that the coding rate herein is an overall coding rate of the multi-stage encoding. An overall coding rate of two-stage encoding is used as an example. When the coding rate of the component code corresponding to the first stage is r₁, and the coding rate of the component code corresponding to the second stage is r₂, the overall coding rate of the two-stage encoding is r = r₁ × r₂.

Optionally, the coding rate of the component code corresponding to the first stage is positively correlated with the coding rate. Specifically, when the coding rate increases, the coding rate of the component code corresponding to the first stage also increases; or when the coding rate decreases, the coding rate of the component code corresponding to the first stage also decreases.

In specific implementation, the correspondence between the coding rate and the coding rate of the component code corresponding to the first stage may be represented in a plurality of manners. In a possible example, the correspondence between the coding rate and the coding rate of the component code corresponding to the first stage is in a form of a table. For example, Table 4A is an example of the correspondence between the coding rate and the coding rate of the component code corresponding to the first stage.

**Table 4A**

| Coding rate | r₁ |
|---|---|
| (0.88, 1) | 0.93 |
| (0.85, 0.88] | 0.91 |
| (0.80, 0.85] | 0.87 |
| ... | ... |
| (0, 0.12] | 0.71 |

It may be understood that the coding rate that is of the component code corresponding to the first stage and that corresponds to the coding rate in each row in Table 4A is r₁ in the row.

It should be noted that Table 4A is merely an example of the correspondence between the coding rate and the coding rate of the component code corresponding to the first stage. In actual application, the coding rate in the correspondence between the coding rate and the coding rate of the component code corresponding to the first stage is not limited to the coding rate provided in Table 4A, and r₁ corresponding to each coding rate is not limited to r₁ provided in the table. In addition to being represented in a row manner in the table, the correspondence may alternatively be represented in a column manner. This is not limited in this embodiment of this application.

It may be understood that the MCS, the SNR, the modulation order, and the coding rate described in the foregoing four implementations are all parameters that can be used to represent a channel condition. In actual application, in addition to determining, based on the MCS, the SNR, the modulation order, and the coding rate, the coding rate of the component code corresponding to the first stage, another parameter that can represent a channel condition may be used to determine the coding rate of the component code corresponding to the first stage. For example, the coding rate may alternatively be a quantity of iterations of previous decoding (a smaller quantity of times indicates a better channel condition) or an average value of LLRs input during current decoding (a larger average value of LLRs indicates a better channel condition).

The foregoing introduces the coding rate of the component code corresponding to the first stage, and the following introduces the coding rate of the component code corresponding to the second stage.

For ease of description, the following uses "r₂" to represent the coding rate of the component code corresponding to the second stage. "r" is used to represent a total coding rate of multi-stage encoding, where r = r₁ × r₂.

In a possible design, the coding rate of the component code corresponding to the second stage in the multi-stage encoding is related to the first MCS, the first SNR, the first modulation order, or the first coding rate. In other words, the determining, based on the first MCS, the first SNR, the first modulation order, or the first coding rate, the coding rate of the component code corresponding to the at least one stage in the multi-stage encoding may further include: determining, based on the first MCS, the first SNR, the first modulation order, or the first coding rate, a coding rate of a component code corresponding to a second stage in the multi-stage encoding. In this design manner, both the coding rate of the component code corresponding to the first stage and the coding rate of the component code corresponding to the second stage are determined based on the first MCS, the first SNR, the first modulation order, or the first coding rate, so that an overall coding rate of the multi-stage encoding can be stable and a system requirement can be met.

The following describes a specific implementation of determining the coding rate of the component code corresponding to the second stage in the multi-stage encoding.

In a possible implementation, the coding rate that is of the component code corresponding to the second stage and that corresponds to the first MCS may be determined based on a correspondence between the MCS and the coding rate of the component code corresponding to the second stage.

Optionally, the coding rate of the component code corresponding to the second stage is negatively correlated with the MCS. Specifically, when the MCS increases, the coding rate of the component code corresponding to the second stage decreases; or when the MCS decreases, the coding rate of the component code corresponding to the second stage increases.

In specific implementation, the correspondence between the MCS and the coding rate of the component code corresponding to the second stage may be represented in a plurality of manners. In a possible example, the correspondence between the MCS and the coding rate of the component code corresponding to the second stage is in a form of a table. For example, Table 1B is an example of the correspondence between the MCS and the coding rate of the component code corresponding to the second stage.

**Table 1B**

| MCS | r₂ |
|---|---|
| 27 | 0.35 |
| 26 | 0.36 |
| 25 | 0.37 |
| ... | ... |
| 0 | 0.46 |

It may be understood that the coding rate that is of the component code corresponding to the second stage and that corresponds to the MCS in each row in Table 1B is r₁ in the row.

It should be noted that Table 1B is merely an example of the correspondence between the MCS and the coding rate of the component code corresponding to the second stage. In actual application, the MCS in the correspondence between the MCS and the coding rate of the component code corresponding to the second stage is not limited to the MCS provided in Table 1B, and r₁ corresponding to each MCS is not limited to r₁ provided in the table. In addition to being represented in a row manner in the table, the correspondence may alternatively be represented in a column manner. This is not limited in this embodiment of this application.

In some embodiments, the correspondence between the MCS and the coding rate of the component code corresponding to the first stage and the correspondence between the MCS and the coding rate of the component code corresponding to the second stage may be represented by using a table, for example, Table 1C.

**Table 1C**

| MCS | r₁ | r₂ |
|---|---|---|
| 27 | 0.93 | 0.35 |
| 26 | 0.91 | 0.36 |
| 25 | 0.87 | 0.37 |
| ... | ... | ... |
| 0 | 0.71 | 0.46 |

In a possible implementation, the coding rate that is of the component code corresponding to the second stage and that corresponds to the first SNR may be determined based on a correspondence between the SNR and the coding rate of the component code corresponding to the second stage.

Optionally, the coding rate of the component code corresponding to the second stage is negatively correlated with the SNR. Specifically, when the SNR increases, the coding rate of the component code corresponding to the second stage decreases; or when the SNR decreases, the coding rate of the component code corresponding to the second stage increases.

In specific implementation, the correspondence between the SNR and the coding rate of the component code corresponding to the second stage may be represented in a plurality of manners. In a possible example, the correspondence between the SNR and the coding rate of the component code corresponding to the second stage is in a form of a table. For example, Table 2B is an example of the correspondence between the SNR and the coding rate of the component code corresponding to the second stage.

**Table 2B**

| SNR | r₂ |
|---|---|
| [T₂₇, +∞) | 0.35 |
| [T₂₆, T₂₇) | 0.36 |
| [T₂₅, T₂₆) | 0.37 |
| ··· | ··· |
| (-∞, T₀) | 0.46 |

It may be understood that the coding rate that is of the component code corresponding to the second stage and that corresponds to the SNR in each row in Table 2B is r₁ in the row.

It should be noted that Table 2B is merely an example of the correspondence between the SNR and the coding rate of the component code corresponding to the second stage. In actual application, a value interval division manner of the SNR in the correspondence between the SNR and the coding rate of the component code corresponding to the second stage is not limited to the division manner provided in Table 2B, and r₁ corresponding to each SNR interval is not limited to r₁ provided in the table. In addition to being represented in a row manner in the table, the correspondence may alternatively be represented in a column manner. This is not limited in this embodiment of this application.

In some embodiments, the correspondence between the SNR and the coding rate of the component code corresponding to the first stage and the correspondence between the SNR and the coding rate of the component code corresponding to the second stage may be represented by using a table, for example, Table 2C.

**Table 2C**

| SNR | r₁ | r₂ |
|---|---|---|
| [T₂₇, +∞) | 0.93 | 0.35 |
| [T₂₆, T₂₇) | 0.91 | 0.36 |
| [T₂₅, T₂₆) | 0.87 | 0.37 |
| ... | ... | ... |
| (-∞, T₀) | 0.71 | 0.46 |

In a possible implementation, the coding rate that is of the component code corresponding to the second stage and that corresponds to the first modulation order may be determined based on a correspondence between the modulation order and the coding rate of the component code corresponding to the second stage.

Optionally, the coding rate of the component code corresponding to the second stage is negatively correlated with the modulation order. Specifically, when the modulation order increases, the coding rate of the component code corresponding to the second stage decreases; or when the modulation order decreases, the coding rate of the component code corresponding to the second stage increases.

In specific implementation, the correspondence between the modulation order and the coding rate of the component code corresponding to the second stage may be represented in a plurality of manners. In a possible example, the correspondence between the modulation order and the coding rate of the component code corresponding to the second stage is in a form of a table. For example, Table 3B is an example of the correspondence between the modulation order and the coding rate of the component code corresponding to the second stage.

**Table 3B**

| Modulation order | r₂ |
|---|---|
| (1024, +∞) | 0.35 |
| (256, 1024] | 0.36 |
| (64, 256] | 0.37 |
| ... | ... |
| [2, 4] | 0.46 |

It may be understood that the coding rate that is of the component code corresponding to the second stage and that corresponds to the modulation order in each row in Table 3B is r₁ in the row.

It should be noted that Table 3B is merely an example of the correspondence between the modulation order and the coding rate of the component code corresponding to the second stage. In actual application, the modulation order in the correspondence between the modulation order and the coding rate of the component code corresponding to the second stage is not limited to the modulation order provided in Table 3B, and r₁ corresponding to each modulation order is not limited to r₁ provided in the table. In addition to being represented in a row manner in the table, the correspondence may alternatively be represented in a column manner. This is not limited in this embodiment of this application.

In some embodiments, the correspondence between the modulation order and the coding rate of the component code corresponding to the first stage and the correspondence between the modulation order and the coding rate of the component code corresponding to the second stage may be represented by using a table, for example, Table 3C.

**Table 3C**

| Modulation order | r₁ | r₂ |
|---|---|---|
| (1024, +∞) | 0.93 | 0.35 |
| (256, 1024] | 0.91 | 0.36 |
| (64, 256] | 0.87 | 0.37 |
| ... | ... | ... |
| [2, 4] | 0.71 | 0.46 |

In a possible implementation, the coding rate that is of the component code corresponding to the second stage and that corresponds to the first coding rate may be determined based on a correspondence between the coding rate and the coding rate of the component code corresponding to the second stage.

It may be understood that the coding rate herein is an overall coding rate of the multi-stage encoding. An overall coding rate of two-stage encoding is used as an example. When the coding rate of the component code corresponding to the first stage is r₁, and the coding rate of the component code corresponding to the second stage is r₂, the overall coding rate of the two-stage encoding is r = r₁ × r₂.

Optionally, the coding rate of the component code corresponding to the second stage is negatively correlated with the coding rate. Specifically, when the coding rate increases, the coding rate of the component code corresponding to the second stage decreases; or when the coding rate decreases, the coding rate of the component code corresponding to the second stage increases.

In specific implementation, the correspondence between the coding rate and the coding rate of the component code corresponding to the second stage may be represented in a plurality of manners. In a possible example, the correspondence between the coding rate and the coding rate of the component code corresponding to the second stage is in a form of a table. For example, Table 4B is an example of the correspondence between the coding rate and the coding rate of the component code corresponding to the second stage.

**Table 4B**

| Coding rate | r₂ |
|---|---|
| (0.88, 1) | 0.35 |
| (0.85, 0.88] | 0.36 |
| (0.80, 0.85] | 0.37 |
| ... | ... |
| (0, 0.12] | 0.46 |

It may be understood that the coding rate that is of the component code corresponding to the second stage and that corresponds to the coding rate in each row in Table 4B is r₁ in the row.

It should be noted that Table 4B is merely an example of the correspondence between the coding rate and the coding rate of the component code corresponding to the second stage. In actual application, the coding rate in the correspondence between the coding rate and the coding rate of the component code corresponding to the second stage is not limited to the coding rate provided in Table 4B, and r₁ corresponding to each coding rate is not limited to r₁ provided in the table. In addition to being represented in a row manner in the table, the correspondence may alternatively be represented in a column manner. This is not limited in this embodiment of this application.

Optionally, when a quantity of stages of the multi-stage encoding is greater than 2, an overall coding rate of component codes corresponding to all stages other than the first stage may be related to the first MCS, the first SNR, the first modulation order, or the first coding rate.

In another possible design, a coding rate of a component code corresponding to the second stage is determined based on the coding rate of the component code corresponding to the first stage and a total coding rate of the multi-stage encoding, that is, r₂ = r/r₁.

In specific implementation, r₂ = r/r₁ may alternatively be provided by using a table. For example, Table 1A, Table 2A, and Table 3A may respectively correspond to Table 1D, Table 2D, and Table 3D below.

**Table 1D**

| MCS | r₁ | r₂ |
|---|---|---|
| 27 | 0.93 | R₀/0.93 |
| 26 | 0.91 | R₁/0.91 |
| 25 | 0.87 | R₂/0.87 |
| ... | ... | ... |
| 0 | 0.71 | R₂₇/0.71 |

**Table 2D**

| SNR | r₁ | r₂ |
|---|---|---|
| [T₂₇, +∞) | 0.93 | R₀/0.93 |
| [T₂₆, T₂₇) | 0.91 | R₁/0.91 |
| [T₂₅, T₂₆) | 0.87 | R₂/0.87 |
| ... | ... | ... |
| (-∞, T₀) | 0.71 | R₂₇/0.71 |

**Table 3D**

| Modulation order | r₁ | r₂ |
|---|---|---|
| (1024, +∞) | 0.93 | R₀/0.93 |
| (256, 1024] | 0.91 | R₁/0.91 |
| (64, 256] | 0.87 | R₂/0.87 |
| ... | ... | ... |
| [2, 4] | 0.71 | R₂₇/0.71 |

It may be understood that, corresponding to different MCSs, SNRs, modulation orders, or coding rates, the total coding rate of the multi-stage encoding may be different. In other words, R₀, R₁, R₂,..., and R₂₇ in the table may have different values, and the values may be specifically determined based on the MCS table used by the first communication device.

Optionally, when a quantity of stages of the multi-stage encoding is greater than 2, an overall coding rate of component codes corresponding to all stages other than the first stage may be determined based on the coding rate of the component code corresponding to the first stage and the total coding rate of the multi-stage encoding.

The foregoing is merely some examples, and is not limited thereto in practice.

S402: Perform the multi-stage encoding on the information bit based on a coding rate of a component code corresponding to each stage in the multi-stage encoding, to obtain an encoded bit.

For example, the multi-stage encoding may be performed on the information bit based on the coding rate, a quantity of bits before encoding, and a quantity of bits after encoding that are of the component code corresponding to each stage in the multi-stage encoding. It may be understood that encoding includes filling a redundant bit (for example, adding a check code) for the information bit, to obtain the encoded bit (that is, the component code). Correspondingly, the quantity of bits before encoding is a quantity of information bits in the component code, and the quantity of bits after encoding is a total quantity of bits in the component code (that is, a sum of information bits and redundant bits).

The coding rate of the component code corresponding to each stage in the multi-stage encoding may be the coding rate of the component code corresponding to each stage that is determined in a related manner (for example, based on the MCS, the SNR, the modulation order, or the coding rate) described in step S402. Alternatively, the coding rate of the component code corresponding to each stage in the multi-stage encoding may be directly specified in a protocol or a system. This is not limited in this embodiment of this application.

The following describes a method for determining the quantity of bits before encoding of the component code and the quantity of bits after encoding of the component code.

In a possible design, the quantity of bits after encoding of the component code corresponding to each stage may be determined based on the coding rate and the quantity of bits before encoding that are of the component code corresponding to each stage in the multi-stage encoding. For example, the two-stage encoding is used as an example. n₁ is the quantity of bits after encoding of the component code corresponding to the first stage, r₁ is the coding rate of the component code corresponding to the first stage, k₁ is the quantity of bits before encoding of the component code corresponding to the first stage, n₂ is the quantity of bits after encoding of the component code corresponding to the second stage, r₂ is the coding rate of the component code corresponding to the second stage, and k₂ is the quantity of bits before encoding of the component code corresponding to the second stage. If k₁, r₁, k₂, and r₂ are known, n₁=k₁/r₁ and n₂=k₂/r₂ may be obtained through calculation.

The following describes a manner of determining the quantity of bits before encoding of the component code corresponding to each stage in the multi-stage encoding.

In a specific implementation, a protocol specifies or a system specifies (or configures or agrees on) the quantity of bits before encoding of the component code corresponding to each stage in the multi-stage encoding. For example, the protocol specifies or the system specifies values of k₁ and k₂.

In another specific implementation, a protocol specifies or a system specifies (or configures or agrees on) a total quantity (that is, k) of bits before encoding in the multi-stage encoding and a first ratio coefficient. In this case, the quantity of bits before encoding of the component code corresponding to each stage in the multi-stage encoding may be determined based on the total quantity of bits before encoding in the multi-stage encoding and the first ratio coefficient. The first ratio coefficient is a ratio (k₁/k) of the quantity of bits before encoding of the component code corresponding to the first stage in the multi-stage encoding to the total quantity of bits before encoding.

The following describes several possible specific implementations of determining the first ratio coefficient.

In a possible implementation, the first ratio coefficient corresponding to the first MCS may be determined based on a correspondence between the MCS and a ratio coefficient.

Optionally, the ratio coefficient is positively correlated with the MCS. Specifically, when the MCS increases, the ratio coefficient also increases; or when the MCS decreases, the ratio coefficient also decreases.

In specific implementation, the correspondence between the MCS and the ratio coefficient may be represented in a plurality of manners. In a possible example, the correspondence between the MCS and the ratio coefficient is in a form of a table. For example, Table 1E is an example of the correspondence between the MCS and the ratio coefficient.

**Table 1E**

| MCS | k₁/k | r₁ | r₂ |
|---|---|---|---|
| 27 | 0.45 | 0.93 | 0.35 |
| 26 | 0.4 | 0.91 | 0.36 |
| 25 | 0.35 | 0.87 | 0.37 |
| ... | ... | ... | ... |
| 0 | 0.1 | 0.71 | 0.46 |

It should be noted that Table 1E is merely an example of the correspondence between the MCS and the ratio coefficient. In actual application, the MCS in the correspondence between the MCS and the ratio coefficient is not limited to the MCS provided in Table 1E, and the ratio coefficient corresponding to each MCS is not limited to the ratio coefficient provided in the table. In addition to being represented in a row manner in the table, the correspondence may alternatively be represented in a column manner. r₂ in Table 1E may alternatively be determined based on a total coding rate and r₁. Table 1E may not include r₁ and/or r₂. For example, r₁ and/or r₂ are stored in another table. In addition to the parameters shown in Table 1E, more parameters may alternatively be stored in Table 1E. This is not limited in this embodiment of this application.

In a possible implementation, the first ratio coefficient corresponding to the first SNR may be determined based on a correspondence between the SNR and a ratio coefficient.

Optionally, the ratio coefficient is positively correlated with the SNR. Specifically, when the SNR increases, the ratio coefficient also increases; or when the SNR decreases, the ratio coefficient also decreases.

In specific implementation, the correspondence between the SNR and the ratio coefficient may be represented in a plurality of manners. In a possible example, the correspondence between the SNR and the ratio coefficient is in a form of a table. For example, Table 2E is an example of the correspondence between the SNR and the ratio coefficient.

**Table 2E**

| SNR | k₁/k | r₁ | r₂ |
|---|---|---|---|
| [T₂₇, +∞) | 0.45 | 0.93 | 0.35 |
| [T₂₆, T₂₇) | 0.4 | 0.91 | 0.36 |
| [T₂₅, T₂₆) | 0.35 | 0.87 | 0.37 |
| ··· | ··· | ··· | ··· |
| (-∞, T₀) | 0.1 | 0.71 | 0.46 |

It should be noted that Table 2E is merely an example of the correspondence between the SNR and the ratio coefficient. In actual application, the SNR in the correspondence between the SNR and the ratio coefficient is not limited to the SNR provided in Table 2E, and the ratio coefficient corresponding to each SNR is not limited to the ratio coefficient provided in the table. In addition to being represented in a row manner in the table, the correspondence may alternatively be represented in a column manner. r₂ in Table 2E may alternatively be determined based on a total coding rate and r₁. Table 2E may not include r₁ and/or r₂. For example, r₁ and/or r₂ are stored in another table. In addition to the parameters shown in Table 2E, more parameters may alternatively be stored in Table 2E. This is not limited in this embodiment of this application.

In a possible implementation, the first ratio coefficient corresponding to the first modulation order may be determined based on a correspondence between the modulation order and a ratio coefficient.

Optionally, the ratio coefficient is positively correlated with the modulation order. Specifically, when the modulation order increases, the ratio coefficient also increases; or when the modulation order decreases, the ratio coefficient also decreases.

In specific implementation, the correspondence between the modulation order and the ratio coefficient may be represented in a plurality of manners. In a possible example, the correspondence between the modulation order and the ratio coefficient is in a form of a table. For example, Table 3E is an example of the correspondence between the modulation order and the ratio coefficient.

**Table 3E**

| Modulation order | k₁/k | r₁ | r₂ |
|---|---|---|---|
| (1024, +∞) | 0.45 | 0.93 | 0.35 |
| (256, 1024] | 0.4 | 0.91 | 0.36 |
| (64, 256] | 0.35 | 0.87 | 0.37 |
| ··· | ··· | ··· | ··· |
| [2, 4] | 0.1 | 0.71 | 0.46 |

It should be noted that Table 3E is merely an example of the correspondence between the modulation order and the ratio coefficient. In actual application, the modulation order in the correspondence between the modulation order and the ratio coefficient is not limited to the modulation order provided in Table 3E, and the ratio coefficient corresponding to each modulation order is not limited to the ratio coefficient provided in the table. In addition to being represented in a row manner in the table, the correspondence may alternatively be represented in a column manner. r₂ in Table 3E may alternatively be determined based on a total coding rate and r₁. Table 3E may not include r₁ and/or r₂. For example, r₁ and/or r₂ are stored in another table. In addition to the parameters shown in Table 3E, more parameters may alternatively be stored in Table 3E. This is not limited in this embodiment of this application.

In a possible implementation, the first ratio coefficient corresponding to the first coding rate may be determined based on a correspondence between the coding rate and a ratio coefficient.

Optionally, the ratio coefficient is positively correlated with the coding rate. Specifically, when the coding rate increases, the ratio coefficient also increases; or when the coding rate decreases, the ratio coefficient also decreases.

In specific implementation, the correspondence between the coding rate and the ratio coefficient may be represented in a plurality of manners. In a possible example, the correspondence between the coding rate and the ratio coefficient is in a form of a table. For example, Table 4E is an example of the correspondence between the coding rate and the ratio coefficient.

**Table 4E**

| Coding rate | k₁/k | r₁ |
|---|---|---|
| (0.88, 1) | 0.45 | 0.93 |
| (0.85, 0.88] | 0.4 | 0.91 |
| (0.80, 0.85] | 0.35 | 0.87 |
| ... | ... | ... |
| (0, 0.12] | 0.1 | 0.71 |

It should be noted that Table 4E is merely an example of the correspondence between the coding rate and the ratio coefficient. In actual application, the coding rate in the correspondence between the coding rate and the ratio coefficient is not limited to the coding rate provided in Table 4E, and the ratio coefficient corresponding to each coding rate is not limited to the ratio coefficient provided in the table. In addition to being represented in a row manner in the table, the correspondence may alternatively be represented in a column manner. r₂ in Table 4E may alternatively be determined based on a total coding rate and r₁. Table 4E may not include r₁. For example, the correspondence between r₁ and the coding rate is stored in another table. In addition to the parameters shown in Table 4E, more parameters (for example, r₂) may alternatively be stored in Table 4E. This is not limited in this embodiment of this application.

The foregoing is merely some examples, and is not limited thereto in practice.

After the first ratio coefficient (k₁/k) is determined, a ratio of the quantity of bits before encoding of the component code corresponding to the second stage to the total quantity of bits before encoding may be determined based on k and the first ratio coefficient, that is, k₂/k=1-k₁/k.

In some embodiments, the first ratio coefficient may alternatively be a ratio (k₂/k) of the quantity of bits before encoding of the component code corresponding to the second stage to the total quantity of bits before encoding, and k₁/k may be determined based on k and k₂/k.

In a possible design, determining, based on the coding rate and the quantity of bits after encoding that are of the component code corresponding to each stage in the multi-stage encoding, the quantity of bits before encoding of the component code corresponding to each stage. For example, the two-stage encoding is used as an example. n₁ is the quantity of bits after encoding of the component code corresponding to the first stage, r₁ is the coding rate of the component code corresponding to the first stage, k₁ is the quantity of bits before encoding of the component code corresponding to the first stage, n₂ is the quantity of bits after encoding of the component code corresponding to the second stage, r₂ is the coding rate of the component code corresponding to the second stage, and k₂ is the quantity of bits before encoding of the component code corresponding to the second stage. If n₁, r₁, n₂, and r₂ are known, k₁=n₁×r₁ and k₂=n₂×r₂ may be obtained through calculation.

The following describes a manner of determining the quantity of bits after encoding of the component code corresponding to each stage in the multi-stage encoding.

In a specific implementation, a protocol specifies or a system specifies (or configures or agrees on) the quantity of bits after encoding of the component code corresponding to each stage in the multi-stage encoding. For example, the protocol specifies or the system specifies values of n₁ and n₂.

In a specific implementation, a protocol specifies or a system specifies (or configures or agrees on) a total quantity (that is, n) of bits after encoding in the multi-stage encoding and a second ratio coefficient. In this case, the quantity of bits after encoding of the component code corresponding to each stage in the multi-stage encoding may be determined based on the total quantity of bits after encoding in the multi-stage encoding and the second ratio coefficient. The second ratio coefficient is a ratio (n₁/n) of the quantity of bits after encoding of the component code corresponding to the first stage in the multi-stage encoding to the total quantity of bits after encoding.

The following describes several possible specific implementations of determining the second ratio coefficient.

In a possible implementation, the second ratio coefficient corresponding to the first MCS may be determined based on a correspondence between the MCS and a ratio coefficient.

Optionally, the ratio coefficient is positively correlated with the MCS. Specifically, when the MCS increases, the ratio coefficient also increases; or when the MCS decreases, the ratio coefficient also decreases.

In specific implementation, the correspondence between the MCS and the ratio coefficient may be represented in a plurality of manners. In a possible example, the correspondence between the MCS and the ratio coefficient is in a form of a table. For example, Table 1F is an example of the correspondence between the MCS and the ratio coefficient.

**Table 1F**

| MCS | n₁/n | r₁ | r₂ |
|---|---|---|---|
| 27 | 0.45 | 0.93 | 0.35 |
| 26 | 0.4 | 0.91 | 0.36 |
| 25 | 0.35 | 0.87 | 0.37 |
| ... | ... | ... | ... |
| 0 | 0.1 | 0.71 | 0.46 |

It should be noted that Table 1F is merely an example of the correspondence between the MCS and the ratio coefficient. In actual application, the MCS in the correspondence between the MCS and the ratio coefficient is not limited to the MCS provided in Table 1F, and the ratio coefficient corresponding to each MCS is not limited to the ratio coefficient provided in the table. In addition to being represented in a row manner in the table, the correspondence may alternatively be represented in a column manner. r₂ in Table 1F may alternatively be determined based on a total coding rate and r₁. Table 1F may not include r₁ and/or r₂. For example, r₁ and/or r₂ are stored in another table. In addition to the parameters shown in Table 1F, more parameters may alternatively be stored in Table 1F. This is not limited in this embodiment of this application.

In a possible implementation, the second ratio coefficient corresponding to the first SNR may be determined based on a correspondence between the SNR and a ratio coefficient.

Optionally, the ratio coefficient is positively correlated with the SNR. Specifically, when the SNR increases, the ratio coefficient also increases; or when the SNR decreases, the ratio coefficient also decreases.

In specific implementation, the correspondence between the SNR and the ratio coefficient may be represented in a plurality of manners. In a possible example, the correspondence between the SNR and the ratio coefficient is in a form of a table. For example, Table 2F is an example of the correspondence between the SNR and the ratio coefficient.

**Table 2F**

| SNR | n₁/n | r₁ | r₂ |
|---|---|---|---|
| [T₂₇, +∞) | 0.45 | 0.93 | 0.35 |
| [T₂₆, T₂₇) | 0.4 | 0.91 | 0.36 |
| [T₂₅, T₂₆) | 0.35 | 0.87 | 0.37 |
| ... | ... | ... | ... |
| (-∞, T₀) | 0.1 | 0.71 | 0.46 |

It should be noted that Table 2F is merely an example of the correspondence between the SNR and the ratio coefficient. In actual application, the SNR in the correspondence between the SNR and the ratio coefficient is not limited to the SNR provided in Table 2F, and the ratio coefficient corresponding to each SNR is not limited to the ratio coefficient provided in the table. In addition to being represented in a row manner in the table, the correspondence may alternatively be represented in a column manner. r₂ in Table 2F may alternatively be determined based on a total coding rate and r₁. Table 2F may not include r₁ and/or r₂. For example, r₁ and/or r₂ are stored in another table. In addition to the parameters shown in Table 2F, more parameters may alternatively be stored in Table 2F. This is not limited in this embodiment of this application.

In a possible implementation, the second ratio coefficient corresponding to the first modulation order may be determined based on a correspondence between the modulation order and a ratio coefficient.

Optionally, the ratio coefficient is positively correlated with the modulation order. Specifically, when the modulation order increases, the ratio coefficient also increases; or when the modulation order decreases, the ratio coefficient also decreases.

In specific implementation, the correspondence between the modulation order and the ratio coefficient may be represented in a plurality of manners. In a possible example, the correspondence between the modulation order and the ratio coefficient is in a form of a table. For example, Table 3F is an example of the correspondence between the modulation order and the ratio coefficient.

**Table 3F**

| Modulation order | n₁/n | r₁ | r₂ |
|---|---|---|---|
| (1024, +∞) | 0.45 | 0.93 | 0.35 |
| (256, 1024] | 0.4 | 0.91 | 0.36 |
| (64, 256] | 0.35 | 0.87 | 0.37 |
| ... | ... | ... | ... |
| [2, 4] | 0.1 | 0.71 | 0.46 |

It should be noted that Table 3F is merely an example of the correspondence between the modulation order and the ratio coefficient. In actual application, the modulation order in the correspondence between the modulation order and the ratio coefficient is not limited to the modulation order provided in Table 3F, and the ratio coefficient corresponding to each modulation order is not limited to the ratio coefficient provided in the table. In addition to being represented in a row manner in the table, the correspondence may alternatively be represented in a column manner. r₂ in Table 3F may alternatively be determined based on a total coding rate and r₁. Table 3F may not include r₁ and/or r₂. For example, r₁ and/or r₂ are stored in another table. In addition to the parameters shown in Table 3F, more parameters may alternatively be stored in Table 3F. This is not limited in this embodiment of this application.

In a possible implementation, the second ratio coefficient corresponding to the first coding rate may be determined based on a correspondence between the coding rate and a ratio coefficient.

Optionally, the ratio coefficient is positively correlated with the coding rate. Specifically, when the coding rate increases, the ratio coefficient also increases; or when the coding rate decreases, the ratio coefficient also decreases.

In specific implementation, the correspondence between the coding rate and the ratio coefficient may be represented in a plurality of manners. In a possible example, the correspondence between the coding rate and the ratio coefficient is in a form of a table. For example, Table 4F is an example of the correspondence between the coding rate and the ratio coefficient.

**Table 4F**

| Coding rate | n₁/n | r₁ |
|---|---|---|
| (0.88, 1) | 0.45 | 0.93 |
| (0.85, 0.88] | 0.4 | 0.91 |
| (0.80, 0.85] | 0.35 | 0.87 |
| ... | ... | ... |
| (0, 0.12] | 0.1 | 0.71 |

It should be noted that Table 4F is merely an example of the correspondence between the coding rate and the ratio coefficient. In actual application, the coding rate in the correspondence between the coding rate and the ratio coefficient is not limited to the coding rate provided in Table 4F, and the ratio coefficient corresponding to each coding rate is not limited to the ratio coefficient provided in the table. In addition to being represented in a row manner in the table, the correspondence may alternatively be represented in a column manner. r₂ in Table 4F may alternatively be determined based on a total coding rate and r₁. Table 4F may not include r₁. For example, the correspondence between r₁ and the coding rate is stored in another table. In addition to the parameters shown in Table 4F, more parameters (for example, r₂) may alternatively be stored in Table 4F. This is not limited in this embodiment of this application.

The foregoing is merely some examples, and is not limited thereto in practice.

After the second ratio coefficient (n₁/n) is determined, a ratio of the quantity of bits before encoding of the component code corresponding to the second stage to the total quantity of bits before encoding may be determined based on n and the second ratio coefficient, that is, n₂/n=1-n₁/n.

In some embodiments, the second ratio coefficient may alternatively be a ratio (n₂/n) of the quantity of bits before encoding of the component code corresponding to the second stage to the total quantity of bits before encoding, and n₁/n may be determined based on n and n₂/n.

It may be understood that the foregoing tables provided in this embodiment of this application may exist independently, or may be combined into a new table form. This is not limited in this embodiment of this application.

In a possible design, if a quantity of bits of the information bit is not capable of being exactly divided by the total quantity of bits before encoding of the multi-stage encoding, at least one of repetition and zero padding is performed on the information bit, to enable a quantity of bits of the processed information bit to be capable of being exactly divided by the total quantity of bits before encoding of the multi-stage encoding; and the multi-stage encoding is performed on the processed information bit based on the coding rate of the component code corresponding to each stage in the multi-stage encoding.

For example, the quantity of bits of the information bit is A' bits. When a product code with a size of k=k₁ · k₂ is used for encoding, if A' cannot be exactly divided by k₁ · k₂, the input A' bits are adjusted as follows:
It is denoted that ${A}_{p} = \left⌈\frac{A ′}{k}\right⌉ ⋅ k - A ′$, and a specific adjustment manner includes, for example, but is not limited to:
Manner 1: Add Aₚ zeros to the beginning of the A' bits.
Manner 2: Add Aₚ zeros to the end of the A' bits.
Manner 3: Copy first Aₚ bits of the A' bits and place the copied bits at the end of the A' bits.
Manner 4: Copy last Aₚ bits of the A' bits and place the copied bits at the beginning of the A' bits.

S403: Output the encoded bit.

It may be understood that outputting the encoded bit herein may mean inputting the encoded bit to a next processing node (for example, rate matching, interleaving, or constellation modulation), or may mean sending the encoded bit through a radio channel. This is not limited.

In the encoding method provided in S401 to S403, a specific division method for the coding rate (for example, r₁, r₂), the code length (for example, n₁, n₂, or k₁, k₂), and the like in each stage of the multi-stage encoding is provided, thereby improving encoding reliability. In addition, in this embodiment of this application, the coding rate of each stage in the multi-stage encoding is determined based on a parameter related to the channel condition, such as the MCS, the SNR, the modulation order, or the coding rate. In other words, the coding rate is divided based on the channel condition. Therefore, decoding performance of the multi-stage encoding may be improved and decoding complexity of the multi-stage encoding may be reduced.

It may be understood that, in the foregoing solution of S401 to S403, the coding rate of the component code in each stage is first divided based on the channel condition, and then the code length of the component code in each stage is determined based on the determined coding rate. In actual application, the code length of the component code in each stage may be first determined based on the channel condition, and then the coding rate of the component code in each stage is determined based on the determined code length.

For example, a protocol or a system specifies a code length after encoding (for example, n₁ and n₂). The first communication device may determine, based on the first MCS, the first SNR, the first modulation order, or the first coding rate, a quantity of bits before encoding (for example, k₁ and k₂) of the component code corresponding to the at least one stage in the multi-stage encoding performed on the information bit, to obtain a coding rate (for example, r₁=k₁/n₁, or r₂=k₂/n₂) of the corresponding component code. For a specific implementation in which the first communication device may determine, based on the first MCS, the first SNR, the first modulation order, or the first coding rate, the quantity of bits of the component code corresponding to the at least one stage in the multi-stage encoding performed on the information bit, refer to the foregoing specific implementation in which the first communication device may determine, based on the first MCS, the first SNR, the first modulation order, or the first coding rate, the coding rate of the component code corresponding to the at least one stage in the multi-stage encoding performed on the information bit (for example, related content in Table 1A to Table 4A, Table 1B to Table 4B, Table 1C to Table 4C, and Table 1D to Table 4D). Details are not described herein again.

For example, a protocol or a system specifies a code length before encoding (for example, k₁ and k₂). The first communication device may determine, based on the first MCS, the first SNR, the first modulation order, or the first coding rate, a quantity of bits after encoding (for example, n₁ and n₂) of the component code corresponding to the at least one stage in the multi-stage encoding performed on the information bit, to obtain a coding rate (for example, r₁=k₁/n₁, or r₂=k₂/n₂) of the corresponding component code. For a specific implementation in which the first communication device may determine, based on the first MCS, the first SNR, the first modulation order, or the first coding rate, the bit after encoding of the component code corresponding to the at least one stage in the multi-stage encoding performed on the information bit, refer to the foregoing specific implementation in which the first communication device may determine, based on the first MCS, the first SNR, the first modulation order, or the first coding rate, the coding rate of the component code corresponding to the at least one stage in the multi-stage encoding performed on the information bit (for example, related content in Table 1A to Table 4A, Table 1B to Table 4B, Table 1C to Table 4C, and Table 1D to Table 4D). Details are not described herein again.

In a possible design, after the encoded bit is output, rate matching is further performed on the encoded bit. In this embodiment of this application, rate matching may be separately performed on a component code at each stage in the multi-stage encoding.

Two-stage encoding is still used as an example. Rate matching may be performed on the component code (a code length is n₁) corresponding to the first stage in the multi-stage encoding based on a first target code length (for example, z₁); and rate matching may be performed on the component code (a code length is n₂) corresponding to the second stage in the multi-stage encoding based on a second target code length (for example, z₂).

For example, for the component code corresponding to the first stage, referred to as a first component code below, if n₁ bits need to be matched to z₁ bits for sending, processing may be performed based on the following cases.

If n₁ ≥ z₁, the rate matching manner of the first component code includes but is not limited to the following several manners:
Manner 1: Send first z₁ bits in the n₁ bits of the first component code.
Manner 2: Send last z₁ bits in the n₁ bits of the first component code.
Optional 3: Perform interleaving with a length of n₁ on the first component code, and then send first z₁ bits after interleaving.

If n₁ < z₁, bits in the first component code may be repeatedly and cyclically sent. For example, after n₁ bits of the first component code are sequentially sent, first (z₁ - n₁) bits in the n₁ bits of the first component code are sent.

For example, for the component code corresponding to the second stage, referred to as a second component code below, if n₂ bits need to be matched to z₂ bits for sending, processing may be performed based on the following cases.

If n₂ ≥ z₂, the rate matching manner of the second component code includes but is not limited to the following several manners:
Manner 1: Send first z₂ bits in the n₂ bits of the second component code.
Manner 2: Send last z₂ bits in the n₂ bits of the second component code.
Optional 3: Perform interleaving with a length of n₂ on the second component code, and then send first z₂ bits after interleaving.

If n₂ < z₂, bits in the second component code may be repeatedly and cyclically sent. For example, after n₂ bits of the second component code are sequentially sent, first (z₂ - n₂) bits in the n₂ bits of the second component code are sent.

In a specific implementation, a target code length corresponding to each stage in the multi-stage encoding may be specified by a protocol or agreed by a system. For example, the protocol specifies values of z₁ and z₂.

In another specific implementation, an overall target code length of the multi-stage encoding is specified in a protocol or agreed on by a system. For example, z is specified, where z=z₁ × z₂. z₁ is related to the first MCS, the first SNR, the first modulation order, or the first coding rate. In other words, z₁ may be determined based on the first MCS, the first SNR, the first modulation order, or the first coding rate. z₂ is related to the first MCS, the first SNR, the first modulation order, or the first coding rate. In other words, z₂ may be determined based on the first MCS, the first SNR, the first modulation order, or the first coding rate. Alternatively, z₂ may be determined based on z and z₁, for example, z₂ = z/z₁.

In the foregoing design manner, rate matching is separately performed on the component code in each stage of the multi-stage encoding, so that flexibility of rate matching is improved, and punctured or repeated bits in a rate matching process can be distributed to various locations in encoded bit, thereby further improving decoding performance of the multi-stage encoding.

It may be understood that the foregoing implementations may be separately implemented, or may be implemented in combination with each other. To better understand the technical solutions provided in embodiments of this application, the following further describes embodiments of this application by using a more complete encoding procedure as an example.

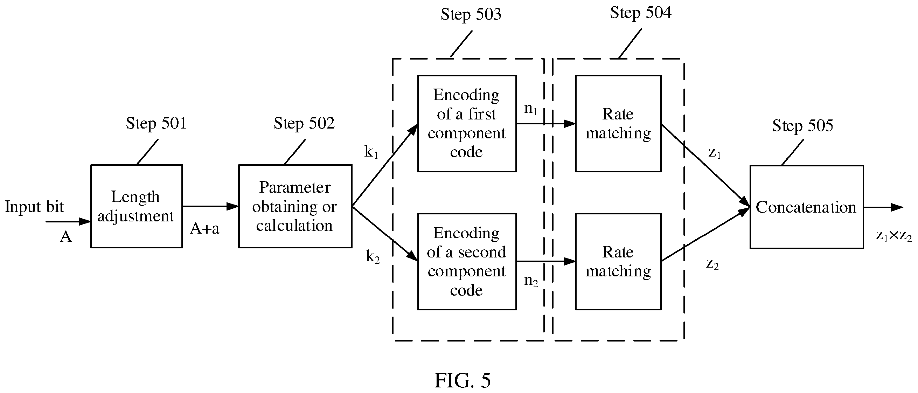

FIG. 5 shows an example of an encoding procedure according to an embodiment of this application. The procedure includes the following steps.

Step 501: Adjust a length of an input bit. A first communication device sends a total of A bits. If A cannot be exactly divided by k=k₁ · k₂, the input A bits are adjusted in any one of the following manners:
Manner 1: Add a zeros to the beginning of the A bits.
Manner 2: Add a zeros to the end of the A bits.
Manner 3: Copy first a bits of the A bits and place the copied bits at the end of the A bits.
Manner 4: Copy last a bits of the A bits and place the copied bits at the beginning of the A bits.

Herein, $a = \left⌈\frac{A}{k}\right⌉ ⋅ k - A$.

Step S502: Obtain or calculate a parameter. The parameter includes a quantity k₁ of bits before encoding of a first component code and a quantity k₂ of bits before encoding of a second component code of a product code, a coding rate r₁ of the first component code and a coding rate r₂ of the second component code, and the like.

For example, *r*₁ and *r*₂ are obtained based on the first MCS, the first SNR, the first modulation order, the first coding rate, or the like; or *r*₁ is obtained based on the first MCS, the first SNR, the first modulation order, the first coding rate, or the like, and *r*₂=r/*r*₁ is obtained through calculation based on the total coding rate r and *r*₁.

For example, the quantity of bits (k₁ and k₂) before encoding may be obtained in any one of the following manners:
Manner 1: A system specifies k₁ and k₂.
Manner 2: Obtain k₁/*k* based on the first MCS, the first SNR, the first modulation order, the first coding rate, or the like, and then obtain k₁ = k · k₁/k and k₂ = k/k₁ through calculation.

Then, quantities of bits after encoding n₁ and n₂ are obtained through calculation based on *k*₁ and *k*₂, *r*₁ and *r*₂. Alternatively, the system specifies n₁ and n₂. Alternatively, n₁/*n* is obtained based on the first MCS, the first SNR, the first modulation order, the first coding rate, or the like, and then n₁ = n · *n*₁/n and n₂ = n/n₁ may be obtained through calculation.

Step S503: Encode. For the first component code (row direction), a code of (n₁, k₁) is obtained based on 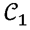 *.* For the second component code (column direction), a code of (n₂, k₂) is obtained based on 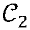 . Because two-stage encoding is used, an encoding result of 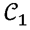 is used as an input of 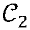 . Therefore, there are a total of k₁ codes for 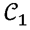 , and there are a total of m₂ codes for 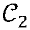 .

Step S504: Perform rate matching.

For example, for the component code corresponding to the first stage, referred to as a first component code below, if n₁ bits need to be matched to z₁ bits for sending, processing may be performed based on the following cases.

If n₁ ≥ z₁, the rate matching manner of the first component code includes but is not limited to the following several manners:
Manner 1: Send first z₁ bits in the n₁ bits of the first component code.
Manner 1: Send last z₁ bits in the n₁ bits of the first component code.
Optional 3: Perform interleaving with a length of n₁ on the first component code, and then send first z₁ bits after interleaving.

If n₁ < z₁, bits in the first component code may be repeatedly and cyclically sent. For example, after n₁ bits of the first component code are sequentially sent, first (z₁ - n₁) bits in the n₁ bits of the first component code are sent.

For example, for the component code corresponding to the second stage, referred to as a second component code below, if n₂ bits need to be matched to z₂ bits for sending, processing may be performed based on the following cases.

If n₂ ≥ z₂, the rate matching manner of the second component code includes but is not limited to the following several manners:
Manner 1: Send first z₂ bits in the n₂ bits of the second component code.
Manner 1: Send last z₂ bits in the n₂ bits of the second component code.
Optional 3: Perform interleaving with a length of n₂ on the second component code, and then send first z₂ bits after interleaving.

If n₂ < z₂, bits in the second component code may be repeatedly and cyclically sent. For example, after n₂ bits of the second component code are sequentially sent, first (z₂ - n₂) bits in the n₂ bits of the second component code are sent.

Step S505: Perform concatenation. For example, n₂ × n₁ obtained through rate matching may be read and sent in any one of the following manners.

Manner 1: Send row by row. In other words, an encoding result of a 1^{st} first component code is first sent, and an encoding result that is of the first component code and that corresponds to a check bit of the second component code is finally sent.

Manner 2: Send column by column. In other words, an encoding result of a 1^{st} second component code is first sent, and an encoding result that is of the second component code and that corresponds to a check bit of a last bit of the first component code is finally sent.

Certainly, the foregoing procedure is merely a possible example, and an actual situation is not limited thereto.

The foregoing describes the encoding method provided in embodiments of this application. The following describes a decoding (or decoding) method provided in embodiments of this application.

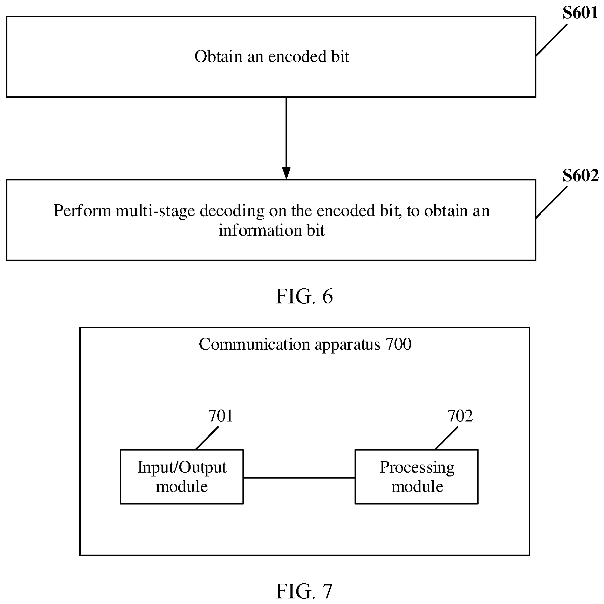

FIG. 6 is a flowchart of a decoding method according to an embodiment of this application. The method may be applied to the communication system shown in FIG. 3. The method may be performed by a second communication device. Unless otherwise specified, the "second communication device" in this application may be the second communication device (for example, the terminal device or the network device shown in FIG. 3), may be a component (for example, a processor, a chip, or a chip system) in the second communication device, or may be a logic module or software that can implement all or some functions of the second communication device. The method includes steps S601 and S602.

S601: Obtain an encoded bit.

It may be understood that the encoded bit herein may be the encoded bit output in the method shown in FIG. 3 above.

S602: Perform multi-stage decoding on the encoded bit, to obtain an information bit.

It may be understood that performing multi-stage decoding on the encoded bit is a reverse process of performing multi-stage encoding on the information bit. For example, a coding rate of a component code corresponding to at least one stage in multi-stage decoding performed on the encoded bit is determined based on a first MCS, a first SNR, a first modulation order, or a first coding rate, where the first MCS is an MCS used for the encoded bit and the information bit, the first SNR is an SNR of a channel used to carry the encoded bit, the first modulation order is a modulation order used for the encoded bit, and the first coding rate is a coding rate used for the encoded bit; and the multi-stage encoding is performed on the encoded bit based on a coding rate of a component code corresponding to each stage in the multi-stage encoding, to obtain an information bit.

For a specific decoding process, refer to the encoding process in the foregoing encoding method. Details are not described herein again.

In the decoding method provided in S601 and S602, a specific division method for the coding rate (for example, r₁, r₂), the code length (for example, n₁, n₂, or k₁, k₂), and the like in each stage of the multi-stage decoding is provided, thereby improving decoding reliability. In addition, in this embodiment of this application, the coding rate of each stage in the multi-stage encoding is determined based on a parameter related to the channel condition, such as the MCS, the SNR, the modulation order, or the coding rate. In other words, the coding rate is divided based on the channel condition. Therefore, decoding performance of the multi-stage decoding may be improved and decoding complexity of the multi-stage decoding may be reduced.

The method provided in this embodiment of this application is described above with reference to the accompanying drawings. The following describes apparatuses provided in embodiments of this application with reference to the accompanying drawings. These communication apparatuses may be configured to implement functions in the foregoing method embodiments, and therefore can also implement beneficial effects of the foregoing method embodiments.

FIG. 7 is a diagram of a possible structure of a communication apparatus according to an embodiment of this application. The communication apparatus includes an input/output module 701 and a processing module 702. The input/output module 701 may include only an input module, or may include only an output module, or may include an input module and an output module.

When the communication apparatus 700 is configured to implement the functions of the first communication device in the method embodiment shown in FIG. 3, the processing module 702 is configured to: determine, based on a first MCS, a first SNR, a first modulation order, or a first coding rate, a coding rate of a component code corresponding to at least one stage in multi-stage encoding performed on an information bit, where the first MCS is an MCS used for the information bit, the first SNR is an SNR of a channel used to carry the information bit, the first modulation order is a modulation order used for the information bit, and the first coding rate is a coding rate used for the information bit; and perform the multi-stage encoding on the information bit based on a coding rate of a component code corresponding to each stage in the multi-stage encoding, to obtain an encoded bit. The input/output module 701 is configured to output the encoded bit.

For more detailed descriptions of the processing module 702 and the input/output module 701, directly refer to the related descriptions in the method embodiment shown in FIG. 4. Details are not described herein.

For example, when the communication apparatus 700 is configured to implement the function of the second communication device in the method embodiment shown in FIG. 6, the input/output module 701 is configured to obtain an encoded bit. The processing module 702 is configured to: perform multi-stage decoding on the encoded bit, to obtain an information bit.

For more detailed descriptions of the processing module 702 and the input/output module 701, directly refer to the related descriptions in the method embodiment shown in FIG. 6. Details are not described herein.

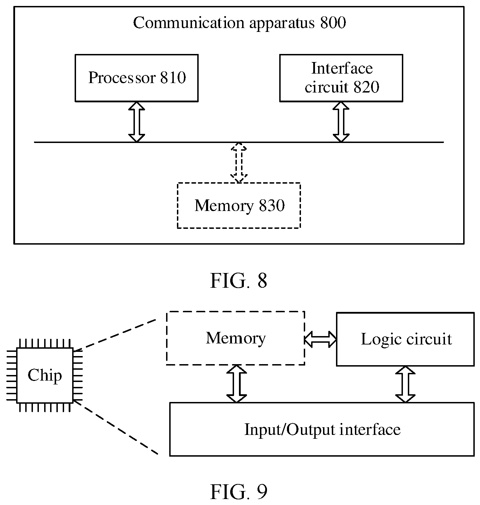

Based on a same technical concept, an embodiment of this application further provides a communication apparatus 800. As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface.

Optionally, the communication apparatus 800 may further include a memory 830, configured to: store instructions executed by the processor 810, store input data required for running instructions by the processor 810, or store data generated by running instructions by the processor 810.

When the communication apparatus 800 is configured to implement the apparatus shown in FIG. 7, the processor 810 is configured to implement functions of the processing module 702, and the interface circuit 820 is configured to implement functions of the input/output module 701.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) that is used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be noted that the memory described in this specification is intended to include but not limited to these memories and any memory of another appropriate type.

Based on a same technical concept, an embodiment of this application further provides a chip. Refer to FIG. 9. The chip may include a logic circuit and an input/output interface. Optionally, a memory may be further included. The input/output interface may be configured to: receive code instructions (the code instructions are stored in the memory, and may be directly read from the memory, or may be read from the memory via another component), and transmit the code instructions to the logic circuit. The logic circuit may be configured to run the code instructions to perform the method in the foregoing method embodiment.

Alternatively, the input/output interface may be a signal transmission interface circuit between the logic circuit and the transceiver. For example, in a sending scenario, the logic circuit is configured to perform XX to obtain Y data (XX is a non-air interface operation, and includes but is not limited to operations such as determining, decision, processing, calculation, searching, and comparison). The input/output interface may be configured to send the Y data to a transmitter (the transmitter is configured to perform a sending operation on an air interface). For another example, in a receiving scenario, the input/output interface may be configured to: receive Z data from a receiver (the receiver is configured to perform a receiving operation on an air interface), and send the Z data to the logic circuit. The logic circuit is configured to perform XX processing on the Z data (XX is a non-air interface operation, and includes but is not limited to operations such as determining, decision, processing, calculation, searching, and comparison).

For example, when the chip is configured to implement the functions of the first communication device in the method embodiment shown in FIG. 4,
the logic circuit is configured to: determine, based on a first MCS, a first SNR, a first modulation order, or a first coding rate, a coding rate of a component code corresponding to at least one stage in multi-stage encoding performed on an information bit, where the first MCS is an MCS used for the information bit, the first SNR is an SNR of a channel used to carry the information bit, the first modulation order is a modulation order used for the information bit, and the first coding rate is a coding rate used for the information bit; and perform the multi-stage encoding on the information bit based on a coding rate of a component code corresponding to each stage in the multi-stage encoding, to obtain an encoded bit; and
the input/output interface is configured to output the encoded bit.

For more detailed descriptions of the logic circuit and the input/output interface, directly refer to the related descriptions in the method embodiment shown in FIG. 4. Details are not described herein.

When the chip is configured to implement the functions of the second communication device in the method embodiment shown in FIG. 6,
the input/output interface is configured to obtain an encoded bit; and
the logic circuit is configured to: perform multi-stage decoding on the encoded bit, to obtain an information bit.

For more detailed descriptions of the logic circuit and the input/output interface, directly refer to the related descriptions in the method embodiment shown in FIG. 6. Details are not described herein.

Based on a same technical concept, an embodiment of this application further provides a computer-readable storage medium. The storage medium stores a computer program or instructions. When the computer program or the instructions is/are executed by a communication apparatus, the method in the foregoing method embodiments is implemented.

Based on a same technical concept, an embodiment of this application further provides a computer program product. When the computer program product runs on a computer, the method in the foregoing method embodiments is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to operate in a specific manner, so that the instructions stored in the computer-readable memory generate an artifact that includes an instruction apparatus. The instruction apparatus implements a specific function in one or more procedures in the flowchart diagrams and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. An encoding method, wherein the method comprises:
determining, based on a first modulation and coding scheme MCS, a first signal-to-noise ratio SNR, a first modulation order, or a first coding rate, a coding rate of a component code corresponding to at least one stage in multi-stage encoding performed on an information bit, wherein the first MCS is an MCS used for the information bit, the first SNR is an SNR of a channel used to carry the information bit, the first modulation order is a modulation order used for the information bit, and the first coding rate is a coding rate used for the information bit;
performing the multi-stage encoding on the information bit based on a coding rate of a component code corresponding to each stage in the multi-stage encoding, to obtain an encoded bit; and
outputting the encoded bit.

2. The method according to claim 1, wherein the determining, based on the first MCS, the first SNR, the first modulation order, or the first coding rate, the coding rate of the component code corresponding to the at least one stage in the multi-stage encoding comprises:
determining, based on the first MCS, the first SNR, the first modulation order, or the first coding rate, a coding rate of a component code corresponding to a first stage in the multi-stage encoding, wherein the first stage is an initial encoding stage in the multi-stage encoding.

3. The method according to claim 2, wherein the determining, based on the first MCS, the first SNR, the first modulation order, or the first coding rate, the coding rate of the component code corresponding to the first stage in the multi-stage encoding comprises:
determining, based on a correspondence between an MCS and the coding rate of the component code corresponding to the first stage, the coding rate that is of the component code corresponding to the first stage and that corresponds to the first MCS; or
determining, based on a correspondence between an SNR and the coding rate of the component code corresponding to the first stage, the coding rate that is of the component code corresponding to the first stage and that corresponds to the first SNR; or
determining, based on a correspondence between a modulation order and the coding rate of the component code corresponding to the first stage, the coding rate that is of the component code corresponding to the first stage and that corresponds to the first modulation order; or
determining, based on a correspondence between a coding rate and the coding rate of the component code corresponding to the first stage, the coding rate that is of the component code corresponding to the first stage and that corresponds to the first coding rate.

4. The method according to claim 3, wherein the coding rate of the component code corresponding to the first stage is positively correlated with the MCS, the SNR, the modulation order, or the coding rate.

5. The method according to any one of claims 2 to 4, wherein the multi-stage encoding is two-stage encoding, and the two-stage encoding comprises the first stage and a second stage; and
the determining, based on the first MCS, the first SNR, the first modulation order, or the first coding rate, the coding rate of the component code corresponding to the at least one stage in the multi-stage encoding further comprises:
determining, based on the first MCS, the first SNR, the first modulation order, or the first coding rate, a coding rate of a component code corresponding to the second stage.

6. The method according to claim 5, wherein the determining, based on the first MCS, the first SNR, the first modulation order, or the first coding rate, the coding rate of the component code corresponding to the second stage comprises:
determining, based on a correspondence between the MCS and the coding rate of the component code corresponding to the second stage, the coding rate that is of the component code corresponding to the second stage and that corresponds to the first MCS; or
determining, based on a correspondence between the SNR and the coding rate of the component code corresponding to the second stage, the coding rate that is of the component code corresponding to the second stage and that corresponds to the first SNR; or
determining, based on a correspondence between the modulation order and the coding rate of the component code corresponding to the second stage, the coding rate that is of the component code corresponding to the second stage and that corresponds to the first modulation order; or
determining, based on a correspondence between the coding rate and the coding rate of the component code corresponding to the second stage, the coding rate that is of the component code corresponding to the second stage and that corresponds to the first coding rate.

7. The method according to claim 5 or 6, wherein the coding rate of the component code corresponding to the second stage is negatively correlated with the MCS, the SNR, the modulation order, or the coding rate.

8. The method according to any one of claims 2 to 4, wherein the multi-stage encoding is two-stage encoding, and the two-stage encoding comprises the first stage and a second stage; and
the method further comprises:
determining, based on the coding rate of the component code corresponding to the first stage and a total coding rate of the two-stage encoding, a coding rate of a component code corresponding to the second stage.

9. The method according to any one of claims 1 to 8, wherein the performing the multi-stage encoding on the information bit based on the coding rate of the component code corresponding to each stage in the multi-stage encoding comprises:
performing the multi-stage encoding on the information bit based on the coding rate, a quantity of bits before encoding, and a quantity of bits after encoding that are of the component code corresponding to each stage in the multi-stage encoding.

10. The method according to claim 9, wherein the method further comprises:
determining, based on the coding rate and the quantity of bits before encoding that are of the component code corresponding to each stage in the multi-stage encoding, the quantity of bits after encoding of the component code corresponding to each stage.

11. The method according to claim 10, wherein the method further comprises:
determining, based on a total quantity of bits before encoding of the multi-stage encoding and a first ratio coefficient, the quantity of bits before encoding of the component code corresponding to each stage in the multi-stage encoding, wherein the first ratio coefficient is a ratio of a quantity of bits before encoding of the component code corresponding to the first stage in the multi-stage encoding to the total quantity of bits before encoding.

12. The method according to claim 11, wherein the method further comprises:
determining, based on a correspondence between the MCS and a ratio coefficient, the first ratio coefficient corresponding to the first MCS; or
determining, based on a correspondence between the SNR and a ratio coefficient, the first ratio coefficient corresponding to the first SNR; or
determining, based on a correspondence between the modulation order and a ratio coefficient, the first ratio coefficient corresponding to the first modulation order; or
determining, based on a correspondence between the coding rate and a ratio coefficient, the first ratio coefficient corresponding to the first coding rate.

13. The method according to claim 12, wherein the ratio coefficient is positively correlated with the MCS, the SNR, the modulation order, or the coding rate.

14. The method according to claim 9, wherein the method further comprises:
determining, based on the coding rate and the quantity of bits after encoding that are of the component code corresponding to each stage in the multi-stage encoding, the quantity of bits before encoding of the component code corresponding to each stage.

15. The method according to claim 14, wherein the method further comprises:
determining, based on a total quantity of bits after encoding of the multi-stage encoding and a second ratio coefficient, the quantity of bits after encoding of the component code corresponding to each stage in the multi-stage encoding, wherein the second ratio coefficient is a ratio of a quantity of bits after encoding of the component code corresponding to the first stage in the multi-stage encoding to the total quantity of bits after encoding.

16. The method according to claim 15, wherein the method further comprises:
determining, based on a correspondence between the MCS and a ratio coefficient, the second ratio coefficient corresponding to the first MCS; or
determining, based on a correspondence between the SNR and a ratio coefficient, the second ratio coefficient corresponding to the first SNR; or
determining, based on a correspondence between the modulation order and a ratio coefficient, the second ratio coefficient corresponding to the first modulation order; or
determining, based on a correspondence between the coding rate and a ratio coefficient, the second ratio coefficient corresponding to the first coding rate.

17. The method according to claim 16, wherein the ratio coefficient is positively correlated with the MCS, the SNR, the modulation order, or the coding rate.

18. The method according to any one of claims 1 to 17, further comprising:
performing rate matching on the component code corresponding to the first stage in the multi-stage encoding based on a first target code length; and
performing rate matching on the component code corresponding to the second stage in the multi-stage encoding based on a second target code length.

19. The method according to any one of claims 1 to 18, wherein the performing the multi-stage encoding on the information bit based on the coding rate of the component code corresponding to each stage in the multi-stage encoding comprises:
if a quantity of bits of the information bit is not capable of being exactly divided by the total quantity of bits before encoding of the multi-stage encoding, performing at least one of repetition and zero padding on the information bit, to enable a quantity of bits of the processed information bit to be capable of being exactly divided by the total quantity of bits before encoding of the multi-stage encoding; and
performing the multi-stage encoding on the processed information bit based on the coding rate of the component code corresponding to each stage in the multi-stage encoding.

20. The method according to any one of claims 1 to 19, wherein the multi-stage encoding is a product code.

21. An encoding method, comprising:
determining, based on a coding rate and a quantity of bits before encoding that are of a component code corresponding to each stage in multi-stage encoding performed on information bit, a quantity of bits after encoding of the component code corresponding to each stage, or determining, based on a coding rate and a quantity of bits after encoding that are of a component code corresponding to each stage in multi-stage encoding performed on information bit, a quantity of bits before encoding of the component code corresponding to each stage;
performing the multi-stage encoding on the information bit based on the coding rate, the quantity of bits before encoding, and the quantity of bits after encoding that are of the component code corresponding to each stage in the multi-stage encoding, to obtain an encoded bit; and
outputting the encoded bit.

22. The method according to claim 21, further comprising:
determining, based on a total quantity of bits before encoding of the multi-stage encoding and a first ratio coefficient, the quantity of bits before encoding of the component code corresponding to each stage in the multi-stage encoding, wherein the first ratio coefficient is a ratio of a quantity of bits before encoding of a component code corresponding to a first stage in the multi-stage encoding to the total quantity of bits before encoding.

23. The method according to claim 21, further comprising:
determining, based on a correspondence between an MCS and a ratio coefficient, the first ratio coefficient corresponding to the first MCS; or
determining, based on a correspondence between an SNR and a ratio coefficient, the first ratio coefficient corresponding to the first SNR; or
determining, based on a correspondence between a modulation order and a ratio coefficient, the first ratio coefficient corresponding to the first modulation order; or
determining, based on a correspondence between a coding rate and a ratio coefficient, the first ratio coefficient corresponding to the first coding rate.

24. The method according to claim 23, wherein the ratio coefficient is positively correlated with the MCS, the SNR, the modulation order, or the coding rate.

25. The method according to claim 21, wherein the method further comprises:
determining, based on a total quantity of bits after encoding of the multi-stage encoding and a second ratio coefficient, the quantity of bits after encoding of the component code corresponding to each stage in the multi-stage encoding, wherein the second ratio coefficient is a ratio of a quantity of bits after encoding of a component code corresponding to a first stage in the multi-stage encoding to the total quantity of bits after encoding.

26. The method according to claim 22, wherein the method further comprises:
determining, based on a correspondence between an MCS and a ratio coefficient, the second ratio coefficient corresponding to the first MCS; or
determining, based on a correspondence between an SNR and a ratio coefficient, the second ratio coefficient corresponding to the first SNR; or
determining, based on a correspondence between a modulation order and a ratio coefficient, the second ratio coefficient corresponding to the first modulation order; or
determining, based on a correspondence between a coding rate and a ratio coefficient, the second ratio coefficient corresponding to the first coding rate.

27. The method according to claim 26, wherein the ratio coefficient is positively correlated with the MCS, the SNR, the modulation order, or the coding rate.

28. A decoding method, wherein the method comprises:
obtaining an encoded bit, wherein the encoded bit is the encoded bit in the method according to any one of claims 1 to 20; and
performing multi-stage decoding on the encoded bit, to obtain an information bit.

29. A decoding method, wherein the method comprises:
obtaining an encoded bit;
determining, based on a first MCS, a first SNR, a first modulation order, or a first coding rate, a coding rate of a component code corresponding to at least one stage in multi-stage decoding performed on the encoded bit, wherein the first MCS is an MCS used for the encoded bit, the first SNR is an SNR of a channel used to carry the encoded bit, the first modulation order is a modulation order used for the encoded bit, and the first coding rate is a coding rate used for the encoded bit; and
performing the multi-stage encoding on the encoded bit based on a coding rate of a component code corresponding to each stage in the multi-stage encoding, to obtain an information bit.

30. A communication apparatus, comprising a module configured to perform the method according to any one of claims 1 to 20, or a module configured to perform the method according to any one of claims 21 to 27, or a module configured to perform the method according to claim 28,or comprising a module configured to perform the method according to claim 29.

31. A communication apparatus, comprising a processor and a memory, wherein the processor is coupled to the memory, the memory is configured to store computer-executable instructions, and the processor is configured to execute the computer-executable instructions stored in the memory, to enable the communication apparatus to perform the method according to any one of claims 1 to 20, or perform the method according to any one of claims 21 to 27, or perform the method according to claim 28, or perform the method according to claim 29.

32. A chip, comprising a logic circuit and an input/output interface, wherein the input/output interface is configured to: receive a signal from another apparatus other than the chip, and transmit the signal to the logic circuit, or send a signal from the logic circuit to another apparatus other than the chip, and the logic circuit is configured to implement the method according to any one of claims 1 to 20, or implement the method according to any one of claims 21 to 27, or implement the method according to claim 28, or implement the method according to claim 29.

33. A computer-readable storage medium, wherein the storage medium stores a computer program or instructions, and when the computer program or the instructions are executed by a communication apparatus, the method according to any one of claims 1 to 20 is implemented, or the method according to any one of claims 21 to 27 is implemented, or the method according to claim 28 is implemented, or the method according to claim 29 is implemented.

34. A computer program product, wherein when the computer program product runs on a computer, the method according to any one of claims 1 to 20 is performed, or the method according to any one of claims 21 to 27 is performed, or the method according to claim 28 is performed, or the method according to claim 29 is performed.

35. A communication system, comprising a first communication apparatus and a second communication apparatus, wherein
the first communication apparatus is configured to perform the method according to any one of claims 1 to 20, and the second communication apparatus is configured to perform the method according to claim 28; or
the first communication apparatus is configured to perform the method according to any one of claims 21 to 27, and the second communication apparatus is configured to perform the method according to claim 29.
